# EUROPÄISCHE PATENTSCHRIFT

(11) **EP 1 984 112 B1**
(45) Veröffentlichungstag und Bekanntmachung des Hinweises auf die Patenterteilung: **09.08.2017**
(21) Anmeldenummer: 07704353.7
(22) Anmeldetag: 05.02.2007
(51) Int. Cl.: B01J 21/04, B01J 21/06, B01J 37/03, B01J 35/10

(54) **AL2O3- UND TIO2- ENTHALTENDE OXIDMISCHUNG**
OXIDE MIXTURE
MÉLANGE D'OXYDES

(30) Priorität: 03.02.2006 DE 102006005484
(43) Veröffentlichungstag der Anmeldung: 29.10.2008
(73) Patentinhaber: Sachtleben Chemie GmbH, 47198 Duisburg (DE)
(72) Erfinder: GESENHUES, Ulrich, 47441 Moers (DE); PROFT, Bernd, 47506 Neukirchen-Vluyn (DE); HIRSCHBERG, Elke, 47447 Moers (DE)
(74) Vertreter: Nobbe, Matthias
(86) Internationale Anmeldenummer: PCT/EP2007/051069
(87) Internationale Veröffentlichungsnummer: WO 2007/088213

(56) Entgegenhaltungen:
- EP-A- 0 339 640
- EP-A1- 1 470 859
- WO-A-2005/065823
- DE-A1- 3 633 030
- DE-A1- 10 352 816
- US-A- 5 229 347
- US-A- 5 922 294
- KIM J ET AL: "Dopants for synthesis of stable bimodally porous titania" JOURNAL OF THE EUROPEAN CERAMIC SOCIETY, ELSEVIER SCIENCE PUBLISHERS, BARKING, ESSEX, GB, Bd. 21, Nr. 16, Dezember 2001 (2001-12), Seiten 2863-2872, XP004323819 ISSN: 0955-2219 in der Anmeldung erwähnt
- SIVAKUMAR S ET AL: "Nanoporous titania-alumina mixed oxides-an alkoxide free sol-gel synthesis" MATERIALS LETTERS, NORTH HOLLAND PUBLISHING COMPANY. AMSTERDAM, NL, Bd. 58, Nr. 21, August 2004 (2004-08), Seiten 2664-2669, XP004521840 ISSN: 0167-577X in der Anmeldung erwähnt
- REDDY B M ET AL: "X-ray photoelectron spectroscopy study of V2O5 dispersion on a nanosized Al2O3-TiO2 mixed oxide" LANGMUIR, ACS, WASHINGTON, DC, US, Bd. 17, Nr. 4, Februar 2001 (2001-02), Seiten 1132-1137, XP002329970 ISSN: 0743-7463
- KANEKO E Y ET AL: "Sol-gel synthesis of titania-alumina catalyst supports" APPLIED CATALYSIS A: GENERAL, ELSEVIER SCIENCE, AMSTERDAM, NL, Bd. 235, Nr. 1-2, 30. August 2002 (2002-08-30), Seiten 71-78, XP004379958 ISSN: 0926-860X
- U.GESENHUES, T.RENTSCHLER: "Crystal Growth and Defect Structure of Al3+-Doped Rutile" JOURNAL OF SOLID STATE CHEMISTRY, Bd. 143, 1999, Seiten 210-218, XP002443256
- K.SUNDMACHER, M.IVANOVA: "Die Reaktivdestillation" CHEMIE IN UNSERER ZEIT, Bd. 37, 2003, Seiten 268-278, XP002443530 in der Anmeldung erwähnt

## Beschreibung

Gegenstand der vorliegenden Erfindung ist eine katalytisch wirksame Oxidmischung sowie ein Verfahren zu deren Herstellung und deren Verwendung.

Insbesondere handelt es sich bei der vorliegenden Erfindung um poröse, acide Katalysatoren und Katalysatorträger, die mindestens eine feste Lösung von Al₂O₃ und TiO₂ ineinander enthalten. Dabei besitzen die Katalysatoren und Katalysatorträger vorzugsweise Poren, die bevorzugt eine einheitliche Porengröße mit mittleren Durchmessern d₅₀ von 2 bis 40 nm, vorzugsweise eine einheitliche Porengröße mit mittleren Durchmessern d₅₀ von 1 bis 2 nm besitzen.

Poren, die eine Porengröße mit Durchmessern von 2 bis 50 nm besitzen, werden auch Mesoporen genannt, Poren unterhalb von 2 nm werden auch Mikroporen genannt. Unter einheitlicher Porengröße ist zu verstehen, dass die logarithmische Durchmesserverteilung eine Breite σ von höchstens 0,50 hat.

Unter Porenvolumen im Sinne der Erfindung werden insbesondere die Beiträge von Meso- und Mikroporen verstanden. Makroporen, wie sie bei Katalysatorformkörpern statt wash-coat-Schichten auf Metall- und Keramikträgern benötigt werden, können vorfabrizierten mikro- und mesoporösen Ausgangsmaterialien durch verschiedene Konfektioniermethoden nach dem Stand der Technik, beispielsweise durch Granulieren oder Extrudieren, nachträglich aufgeprägt werden.

Unter Acidität der Oxidmischung ist sowohl die Brönsted- als auch die Lewis-Acidität der Feststoffoberfläche zu verstehen. Dabei wird aufgrund der experimentellen Erfahrung bei Al₂O₃-dotierten TiO₂-Weißpigmenten (U.Gesenhues, Chem. Eng. Technol. 24 (2001) 685-694) davon ausgegangen, dass Oberflächen von TiO₂ mit darin gelöstem Al₂O₃, wobei Ti auf den Plätzen für das Metall im Feststoff durch Al teilweise substituiert ist, wie reines TiO₂ im hydroxylierten Zustand, also beispielsweise in trockener Gasatmosphäre bis ca. 400°C, Brönsted-Säuren sind. Dehydroxyliert, also beispielsweise in trockener Gasatmosphäre bei höheren Temperaturen, sind sie Lewis-Säuren.

Unter Mischung im engeren Sinn ist ein Gemenge zweier oder mehrerer räumlich getrennt vorliegender chemischer Komponenten zu verstehen. Unter Mischung im weiteren Sinn ist auch die Lösung zweier oder mehrerer Komponenten ineinander zu verstehen.

Bei einer festen Lösung sind die Komponenten atomar-/molekulardispers miteinander vermischt. Feste Lösungen können sowohl kristallin als auch amorph sein und sich auch bei gleichen ineinander gelösten Stoffen im Gehalt dieser Stoffe unterscheiden.

Im Sinne der Erfindung ist der Begriff Oxidmischung als Mischung im engeren Sinne zu verstehen, die jedoch ein oder mehrere feste Lösungen enthalten kann.

Unter Dotierung ist der atomar-/molekulardisperse und strukturell definierte Einbau geringer Mengen einer Komponente in das Volumen einer zweiten Komponente (dann auch Matrix oder Wirtsgitter genannt) zur gezielten Veränderung der Eigenschaften der zweiten Komponente zu verstehen, bei feinen Pulvern auch der Einbau in die Oberflächenschicht oder die Abscheidung darauf.

Das Mischungsverhältnis von Komponenten wird bei festen Lösungen und Dotierungen sinnvollerweise statt in Gewichts-% (Gew.-%) chemisch in Mol-% angegeben. So wird die Zusammensetzung der erfindungsgemäßen Versuchsansätze, die Lösungen von Al₂O₃ und TiO₂ ineinander ergeben sollen, und der erfindungsgemäßen katalytisch wirksamen Oxidmischungen aus Al₂O₃ und TiO₂ in Mol-% Al₂O₃ angegeben. Dabei entspricht die Differenz zu 100 Mol-% dem Anteil von TiO₂. Da ionische Metalloxide meist aus einer dichten Packung von Sauerstoffanionen bestehen, in deren Zwischenräume die Metallionen eingelagert sind und sich dort oft vertreten, kann die Zusammensetzung der Versuchsansätze der Einfachheit halber auch in Mol-% Al angegeben werden, entsprechend dem Stoffmengenanteil der Al-lonen. Im Zweistoffgemisch Abl₂O₃ / TiO₂ entspricht dabei die Differenz zu 100 Mol-% dem Stoffmengenanteil von Ti bzw. der Ti-lonen, hier jeweils bezogen auf die Gesamtstoffmenge der Metallionen. Üblicherweise bildet das Oxid des zu mehr als 50 Mol-% in der Mischung vertretenen Metalls das Wirtsgitter und das Oxid des anderen Metalls die Dotierung.

Diese Betrachtungen können von Zwei- auf Mehrstoffsysteme erweitert werden, beispielsweise wenn die katalytisch wirksame Oxidmischung aus Al₂O₃ und TiO₂ mit weiteren Metalloxiden dotiert wird.

Im wässrigen Medium können je nach Metall sein Oxid oder dessen hydratisierte Vorformen als Verbindungen definierter Stöchiometrie ausfallen. Beispielsweise fallen bei Al Al(OH)₃ und AIOOH aus. Während bei Ti nach traditioneller Vorstellung Titanoxidhydrat bzw. Metatitansäure TiO(OH)₂ ausfällt, zeigen neuere Ergebnisse, dass diese in Wirklichkeit überwiegend aus nanokristallinem Anatas mit amorphem TiO₂ als Rest besteht. Weiter lassen sich bei Al Metalloxid und hydratisierte Vorformen pseudomorph ineinander überführen (B.C. Lippens und J.H. de Boer, Acta Cryst. 17 (1964) 1312). Daher wird im weiteren Text zwischen Oxid und hydratisierter Vorform nicht immer unterschieden.

Acidität und einheitliche Porengröße sind zwei elementare Konzepte in der Katalysatorentwicklung. So wurde schon früh erkannt, dass für bestimmte Reaktionen in der Erdölverarbeitung, beispielsweise das Cracken, die Katalysatoroberfläche acide sein sollte (W.H. Meijs, Diss. Univ.Delft 1962; P.A. Lawrance, GB1010834, 1965). Jedoch haben für Anwendungen im fluid-catalytic-cracking-Prozess (fluid-catalytic-cracking = FCC) der Erdölindustrie beispielsweise reine Al₂O₃-Katalysatoren zuviel Lewisacidität, was zu unerwünschter Hydridabstraktion und Verkokung führt (US-A-2003136707, 2003). Schon recht früh wurde daher versucht, die Acidität durch Erzeugen eines feinteiligen Gemenges von Al₂O₃ und TiO₂ zu optimieren. Bei reinem TiO₂ bleibt nämlich das Metallatom bei höheren Temperaturen auch an der Oberfläche höher mit O-Atomen koordiniert als bei reinem Al₂O₃. Außerdem adsorbiert TiO₂ Wasser stärker als Al₂O₃, was beides bei idealer Feststoffoberfläche zu geringerer Lewisacidität und gewünschter höherer Brönstedacidität führen muss. Darüber hinaus ist TiO₂ thermisch stabiler als Al₂O₃ gegen Reaktion mit H₂O, das in der Erdölverarbeitung mit Katalysatoren entsteht, und Schwefelverbindungen, wie sie beispielsweise im Erdöl vorkommen. Das ist wichtig, weil die Reaktionsprodukte, Metalloxidhydrat bzw. Metallsulfat, beide katalytisch nicht mehr aktiv sind. Ist jedoch TiO₂ in Al₂O₃ oder Al₂O₃ in TiO₂ gelöst, wobei das Metall des Wirtsoxids auf den Plätzen im Feststoff teilweise durch das Metall des Dotieroxids ersetzt ist, so sollten die Plätze des Dotiermetalls an der idealen Oberfläche des Feststoffs gemäß Tanabe-Rechenmodell (K. Tanabe, T. Sumiyoshi, K. Shibata, T. Kiyoura und J. Kitagawa, Bull. Chem. Soc. Japan 47 (1974) 1064-1066) neue Brönsted- und Lewissäurezentren bilden. Allerdings standen zu dieser Zeit noch keine Methoden zur unabhängigen quantitativen Bestimmung der Acidität, beispielsweise über temperaturprogrammierte NH₃-Desorption und IR-Spektroskopie von adsorbiertem Pyridin, zur Verfügung. Weiter konnte der erreichte Grad der Vermischung beider Oxide noch nicht experimentell, beispielsweise über Elektronenmikroskopie, ESCA oder Röntgendiffraktometrie (XRD), bis in atomare bzw. molekulare Dimensionen ermittelt werden. Folgerichtig konnte auch nicht erkannt werden, dass die Einzelheiten des Ablaufs der Fällungsreaktion, mit der die Vorform der Oxidmischung bzw. des dotierten Oxids erzeugt wird, Aufbau und Eigenschaften des Produkts entscheidend beeinflussen können. Daher ist die Beschreibung des Herstellweges im Stand der Technik oft unvollständig offenbart.

Materialien mit AL₂O₃ als Haupt- und TiO₂ als Nebenkomponente sind - meist als Bestandteil vollständiger Katalysatorsysteme - aus dem Stand der Technik bekannt. So offenbart US-A-3016346 Mischungen mit maximal 5,0 Gew.-% TiO₂. GB943238 offenbart Mischungen mit maximal 25 Gew.-% SiO₂ und TiO₂. GB1010834 offenbart Mischungen mit 1 bis 25 Gew.-% TiO₂ US-A-3758600 offenbart Mischungen mit bis zu 60 Gew.-% TiO₂ US-A-4465790 offenbart Mischungen mit 6-8 Gew.-% TiO₂. WO-A-2004029179 offenbart eine vollständig röntgenamorphe Oxidmischung aus einer Al₂O₃-Matrix mit darin gleichförmig "dispergierten" anderen Metalloxiden MeOₓ (Metall = Me), mit einem Molverhältnis von Al/Me > 5. US-A-5229347 und US-A-5558766 offenbaren Mischungen mit 30 Gew.-% TiO₂ wobei die die optimale Katalysatoracidität bei einem molaren Verhältnis von Ti/Al = 1/9 liegen soll. Hier wird auch erstmalig eine Substitution von Al durch Ti in der Oxidmatrix angestrebt. Eine feste Lösung von TiO₂ in Al₂O₃ ist real allerdings nur im unteren Prozentbereich und bei Temperaturen über 1200°C thermodynamisch stabil. Andererseits zeigt DE-A-10352816, dass Al₂O₃ in einem feinen Gemenge mit TiO₂ erzeugt durch gesteuerte Ausfällung von Titanoxidhydrat und Al(OH)₃ oder Auffällung von Titanoxidhydrat auf Al₂O₃ und anschließende Glühung oder Hydrothermal-Behandlung (Hydrothermal = HT), die spezifische Oberfläche und die als besonders aktiv angesehene Anatasmodifikation des TiO₂ bei hohen Temperaturen, beispielsweise in der Kraftwerks- und Autoabgaskatalyse, stabilisieren kann.

Im Gegensatz zu den oben beschriebenen Al₂O₃-reichen TiO₂-Al₂O₃-Mischungen, ist der Stand der Technik zu TiO₂-Al₂O₃-Mischungen, die TiO₂-reich sind, weniger umfangreich:
DE-A-10352816 offenbart Katalysatoren und Katalysatorträger aus TiO₂-Al₂O₃-Mischungen mit bis zu 87 Mol-% TiO₂, jedoch handelt es sich bei diesen Mischungen um Auf- und/oder Ausfällungen von TiO₂ auf Al₂O₃, wobei Al₂O₃ oder ein Al₂O₃-Vorläufer bereits in Form feindisperser Teilchen vorliegt. Das Fällungsprodukt liegt daher weder ganz noch in Teilen in Form einer festen Lösung von Al₂O₃ und TiO₂ ineinander vor.

EP-A-0517136 offenbart Katalysatorträger mit 30 bis 70% Ges.-% TiO₂ und deren Herstellung, wobei Al und Ti ungleichmäßig auf Domänen von etwa 5 µm Größe verteilt sind.

EP-A-0798362 offenbart Katalysatorteilchen aus TiO₂ mit vorzugsweise mehr als 50 Gew.-% Al₂O₃ oder anderen Metalloxiden zur Erhöhung der Temperaturstabilität und der spezifischen Oberfläche des TiO₂. Dabei werden die verschiedenen bekannten wässrigen Verfahren zur Herstellung von Mischungen von TiO₂ und anderen Oxiden wie Al₂O₃, beispielsweise durch Kopräzipitation, aufeinander folgender Ausfällung, Imprägnieren und Compoundieren als gleichwertig betrachtet. In der Anwendung für den FCC-Prozess zeigen sie auch nach den Versuchen der Erfinder keine Unterschiede. Zur spezifischen Oberfläche, zum Porenvolumen und anderen Eigenschaften der Produkte werden keine Angaben gemacht. Das zweite Oxid bewirkt eine Erhöhung der Temperaturstabilität des Katalysatormaterials, indem es Barriereschichten auf TiO₂ bildet; ein Einbau in das TiO₂-Kristallgitte würde dieses destabilisieren (DE-A-10352816; U.Gesenhues, Chem. Eng. Technol. 24 (2001) 685-694). Das zweite Oxid kann daher nicht im TiO₂-Kristal gelöst sein. Die in EP-A-0798362 offenbarten Verfahren zur Herstellung der Oxidmischungen führen somit nicht zu einer festen Lösung von Al₂O₃ und TiO₂ ineinander.

US-A-5922294 offenbart TiO₂ als Katalysatorträger mit anscheinend darin gelöstem Al₂O₃ mit einem Anteil von maximal 60 Gew.-%, hergestellt aus den Metallalkoholaten unter Glühung. Dabei wird TiO₂ in der Anatasmodifikation mit anscheinend darin gelöstem Al₂O₃ durch Hydrolyse einer gemeinsamen alkoholischen Lösung von Ti- und Al-Alkoholaten durch Zusatz von Wasser und Aufarbeitung des Fällprodukts durch Glühung hergestellt. Dieses Herstellverfahren liegt nahe, weil beide Metalle bereits in der Ausgangslösung atomardispers gemischt vorliegen. Auf diese Weise können scheinbar bis zu 39 Gew.-% Al₂O₃ im Anataskristallgitter gelöst werden. Solche festen Lösungen von Al₂O₃ in Anatas sind aber thermodynamisch metastabil gegenüber Zerfall in Rutil und α-Al₂O₃, wobei in der Rutilmodifikation stabil nur 0,6 bis 2,0 Gew.-% Al₂O₃ löslich sind (O. Yamaguchi und Y. Mukaida, J.Am.Ceram.Soc. 72 (1989) 330-333). Die in US-A-5922294 offenbarten Produkte werden porosimetrisch nur hinsichtlich BET charakterisiert. Auch wurde gezeigt, dass es möglich ist, mit dem gleichen Syntheseprinzip Produkte herzustellen, die ein Gesamtporenvolumen von maximal 0,33 cm³/g erreichen. Die Anatasmodifikation des TiO₂ ist bis etwa 850°C stabil; XRD-Reflexe von Al₂O₃ sind bis zu dieser Temperatur nicht zu sehen, oberhalb dieser Temperatur bilden sich Rutil und Korund (J. Kim, K.C. Song, S. Foncillas, S.E. Pratsinis, J.Eur.Ceram.Soc. 21 (2001) 2863-2872; J. Kim, O. Wilhelm und S.E. Pratsinis, J.Am.Ceram.Soc. 84 (2001) 2802-2808). Ebenso offenbart ist, dass dieses Syntheseprinzip durch Zusatz eines organischen Komplexbildners zu verfeinern; es wird ein Produkt mit 50 Mop-% Al, Rest Ti erhalten, das ungeglüht röntgenamorph ist und geglüht im Röntgendiffraktogramm nur Anatasreflexe zeigt. Das Produkt und seine Derivate sind hauptsächlich mikroporös, gemäß einer Bestimmung nach BET zu mind. 74 %, das Gesamtporenvolumen überschreitet 0,31 cm³/g nicht (E.Y. Kaneko, S.H. Pulcinelli, V. Teixeira da Silva, C.V. Santilli, Appl. Catal. A: General 235 (2002) 71-78). Als Belege, dass Al₂O₃ in Anatas gelöst ist, werden nach dem Stand der Technik allgemein das Fehlen von Reflexen der verschiedensten Al₂O₃-Modifikationen in einem sorgfältig aufgenommenen Röntgendiffraktogramm oder die gleichmäßige Verteilung von Al und Ti in elektronenmikroskopischen Aufnahmen angesehen.

Eine Übersicht über acide TiO₂-basierte Katalysatoren, ihren Aufbau und ihre Anwendung geben beispielsweise S. Matsuda und A. Kato in Appl.Catal. 8 (1983) 149-165.

Die Herstellung von Katalysatorträgern aus TiO₂ mit anscheinend darin gelöstem Al₂O₃ ist mehrfach offenbart. Der besondere Fall der Herstellung von TiO₂-Al₂O₃-Mischungen aus wässrigen Ti- und Al-haltigen Lösungen ohne organische Zusätze ist im Stand der Technik jedoch nur selten offenbart.

So offenbaren US-A-5229347 und US-A-5558766 ein Verfahren zur Herstellung, bei dem zu einer gemeinsamen Lösung von Aluminiumsulfat und TiOCl₂ oder TiOSO₄ die zur Neutralisation nötige Menge Natriumaluminatlösung ohne weitere Säure oder Base gegeben werden. Dadurch fallen Al(OH)₃ und Metatitansäure mehr oder weniger fein vermischt aus. Das Fällprodukt wird getrocknet und kalziniert. Nachteilig ist bei diesem Verfahren, dass sich so aufgrund der hohen Acidität der TiOCl₂-Lösung nur Al₂O₃-reiche Mischungen mit TiO₂ herstellen lassen und dass Na⁺-lonen aus dem Fällprodukt bei Neutralisation mit NaAlO₂ im allgemeinen schlecht auswaschbar sind. Das Röntgendiffraktogramm des Glühprodukts ist wenig aussagekräftig, es zeigt kein kristallines TiO₂, sondern nur γ- oder η-Al₂O₃.

Auch offenbart ist ein Verfahren, bei dem ein TiO₂- und ein Al₂O₃-Sol separat aus Metallsulfat- bzw. -nitratlösung durch Neutralisation mit wässriger NH₃-Lösung und Peptisierung mit HNO₃ hergestellt, dann gemischt, mit wässriger NH₃-Lösung geliert und getrocknet sowie evtl. noch bei 400 bis 1000°C geglüht werden; es werden zum einen Gemenge aus reinem Anatas von 5 nm und Boehmit, einer kristallinen AIOOH-Modifikation, mit einer Oberfläche nach BET von 390 bis 535 m²/g offenbart, zum anderen TiO₂-Al₂O₃-Mischungen mit TiO₂ in der Anatasmodifikation und Al₂O₃ in noch nicht geklärter Form sowie einer Oberfläche nach BET von max. 160 bis 260 m²/; das Porenvolumen kann maximal 0,34 cm³/g betragen (S. Sivakumar, C.P. Sibu, P. Mukundan, P. Krishna Pillai und K.G.K. Warrier, Mater. Lett. 58 (2004) 2664-2669). Die TiO₂-AAl₂O₃-Mischungen enthalten 10 bis 57 Mol-% Al, ungeglüht enthalten sie Anataskristallite von 4 bis 5 nm Größe und Boehmit, geglüht nur TiO₂-Kristallite, bis 800°C nur der Anatasmodifikation. Dies sowie Veränderungen der Anatasgitterkonstanten mit dem Al₂O₃-Gehalt der geglühten Mischung werden als Hinweise auf eine feste Lösung von Al₂O₃ in den Anataskristallen bewertet; allerdings ist die Verlässlichkeit der Bestimmung der Gitterkonstanten durch einen unkommentierten Ausreißer (Ti-Al (0.70) in Tab.1) unter fünf Messungen sowie das gänzliche Fehlen von Erläuterungen in Frage gestellt. Außerdem spricht die mit steigenden Al₂O₃-Gehalten der Mischung gefundene wachsende Behinderung der Umwandlung von Anatas in Rutil (Abb. 1 und 2, sowie Text) eher für eine Oberflächenbelegung reiner Anataskristallite mit Al₂O₃. Die Oberfläche der Produkte nach BET liegt ungeglüht bei 390 bis 535 m²/g, wobei erneut ein Ausreißer bei Ti-Al (0.70) zu sehen ist, und sinkt durch Glühung stetig, mit steigendem Al₂O₃-Gehalt der Mischung langsamer. Allerdings ist die Verlässlichkeit der Ergebnisse zum Porenvolumen ist durch meist negative, aber unkommentiert und sogar mit 4 Dezimaldstellen angegebene Werte für Mikroporen in Tab. 2 in Frage gestellt. Die Verteilung der Mesoporendurchmesser ist unimodal und überstreicht stets einen Bereich von 2 bis 17 nm.

Der Nutzen der einheitlichen Porengröße eines Katalysators für die zusätzliche Steuerung von Reaktionen nach der Größe der beteiligen Moleküle wurde mit der Einführung der Zeolithe in den siebziger Jahren offenbar. Zeolithe sind eine Klasse von verschiedenen kristallinen Alumosilikaten und dazu isotypen Aluminophosphaten, deren Poren Teil des Kristallgitters und damit von einheitlicher Größe sind. Das Al/Si- bzw. Al/P-Verhältnis prägt die Kristallstruktur und damit die Porenweite, die maximal 1,2 nm beträgt, legt aber gleichzeitig die Acidität fest. Bisher wurden Zeolithe als Katalysatoren oder Katalysatorträger für Edelmetalle, Übergangsmetalle sowie Alkalimetalle zum Cracken von Naphtha und Schweröl einschließlich des FCC-Prozesses, zum Entschwefeln von Naphtha und Schweröl, zum Konvertieren/lsomerisieren leichtersiedender Kohlenwasserstoffe für die Erhöhung der Oktanzahl von Treibstoffen sowie zur Gewinnung von Edukten für die organischen Grundstoffchemie eingesetzt. Weiter können solche Katalysatoren zur Fischer-Tropsch-Synthese und für die Herstellung von organischen Feinchemikalien benutzt werden.

Es wurde festgestellt, dass für die genannten Reaktionen insbesondere mesoporöse und/oder mikroporöse Katalysatoren und/oder Katalysatorträger einheitlicher Porengröße vorteilhaft sind, bei denen durch Einstellen der Porenabmessungen der Oxidmischung auf die Molekülgröße der gewünschten Produkte das Produktspektrum der zu katalysierenden Reaktionen beeinflusst werden kann.

Eine Übersicht über Herstellung, Aufbau und Anwendungen von Katalysatoren mit einheitlicher Porengröße ist zu finden bei: F. Schüth, Ber.Bunsenges.Phys.Chem. 99 (1995) 1306-1315; A.Sayari, Chem.Mater. 8 (1996) 1840-1852; E.Höft et al., J.prakt.Chem. 338 (1996) 1-15; J.Y. Ying, C.P. Mehnert, M.S. Wong, Angew.Chem. Int.Ed. 38 (1999) 56-77.

Weiterhin wurde festgestellt, dass mesoporöse und/oder mikroporöse Metalloxide mit einheitlicher Porengröße außerdem als Packungsmaterial in Chromatographiesäulen eingesetzt werden können, um Stoffgemische zu trennen. Dies wurde bereits bei reinem TiO₂, wie es beispielsweise von der Sachtleben Chemie GmbH unter der Marke SACHTOPORE vertrieben wird, für pharmazeutische Produkte, Herbizide, Pestizide sowie organische Isomere gezeigt.

Derartige Materialien können also die gewünschten Produkte nicht nur katalytisch erzeugen, sondern auch von den unerwünschten Nebenprodukten trennen, so dass in einem Produktionsverfahren Reaktor und Trennapparat vorteilhaft zusammengelegt werden können, wie dies in der Reaktivdestillation wird das Konzept schon wirtschaftlich genutzt wird (K. Sundmacher u. M. Ivanova, Chemie in unserer Zeit 37 (2003) 268).

US-A-5334368 offenbart das technisch gängigste Verfahren zur Herstellung dieser mesoporösen Katalysatoren einheitlicher Porengröße. Dabei wird aus zwei nichtmischbaren Flüssigkeiten, beispielsweise einer wässrigen und einer organischen, eine Emulsion erzeugt, deren Mizellenform und -größe durch die Kettenlänge und anderen Eigenschaften eines zugesetzten Tensids oder Amphiphils als strukturdirigierendem Zusatz gesteuert wird. In der ersten oder zweiten flüssigen Phase gelöste Metall- und Halbmetallverbindungen wie Wasserglas, Aluminiumnitrat, meist aber Alkoholate der Metalle und Halbmetalle, werden hydrolysiert, indem im Falle der in Wasser gelösten Metall- und Halbmetallverbindungen der pH-Wert geändert oder ein mit Wasser mischbares Lösungsmittel zugegeben oder im Falle der organischen Metall- und Halbmetallverbindungen Wasser zugegeben wird. Das Metallhydroxid, Alumosilikat, Aluminophosphat oder die entsprechende Verbindung scheidet sich dann an den Mizellengrenzflächen ab. Das organische Lösungsmittel kann nach der Fällung durch Trocknung, das Tensid bzw. das organische Additiv durch Extraktion oder Glühung entfernt werden. Eine Glühung ist meist auch erforderlich, um die hydratisiert anfallenden Fällungsprodukte zu entwässern und so in eine stabile Form für die Anwendung in der Katalyse zu überführen. Dabei kann das Porengerüst des Materials kollabieren. Die Entfernung der organischen Verbindungen aus dem Fällprodukt gelingt nicht immer, so dass der bei der Glühung in Form von polykondensierten Aromaten oder Graphitschichten auf der Oberfläche zurückbleibende Kohlenstoff die katalytische Aktivität des Materials verändert. Auf TiO2-Oberflächen beschleunigt er den fotokatalytischen Abbau organischer Schadstoffmoleküle (C. Lettmann, K. Hildenbrand, H. Kisch, W. Macyk, W. F. Maier, Appl.Catal. B 32 (2001) 215-227), bei der Anwendung im Erdöleracken wirken solche Kohlenstoffablagerungen an der Oberfläche der Materialien jedoch als Keim für die unerwünschte Verkokung. Um das Tensid bzw. das organische Additiv leichter entfernen zu können, kann statt der Glühung nach der Trocknung eine Hydrothermalbehandlung durchgeführt, dann extrahiert und erneut getrocknet werden. Diese zusätzlichen Verfahrensschritte verteuern allerdings das Produkt. Ein Vorteil der Herstellung mesoporöser Materialien mit einheitlicher Porengröße über Metall- und Halbmetallalkoholate ist, dass das Produkt keine Alkaliionen enthält. Diese sind schädlich für die Acidität und thermische Stabilität des Katalysators. Nachteilig ist aber, dass metallorganische und organische Reagenzien teurer und gefährlicher als wässrige Chemikalien sind. Bei einigen nach diesem Verfahren hergestellten Produkten wurde eine so regelmäßige Porenanordnung festgestellt, dass zusätzliche Reflexe im Kleinwinkelbereich des Röntgendiffraktogramms gefunden wurden. Ähnliche Verfahren zur Herstellung sind in US-A-5718878, JP-A-20031 19024 und US-A-5140050 offenbart.

Weitere Verfahren zur Herstellung mesoporöser Oxide und ihrer Mischungen sind in der wissenschaftlichen Literatur offenbart (J. Kim, K.C. Song, S. Foncillas, S.E. Pratsinis, J.Eur.Ceram.Soc. 21 (2001) 2863-2872; J. Kim, O. Wilhelm, S.E. Pratsinis, J.Am.Ceram.Soc. 84 (2001) 2802-2808). Bei diesen Verfahren durch Kopräzipitation aus Lösungen von Metallalkoholaten ohne strukturdirigierende Zusätze entstehen teilweise auch mesoporöse Oxide mit einheitlicher Porengröße. Jedoch wird keine klare technische Anleitung offenbart, wie der Porendurchmesser unabhängig vom Dotierniveau auf Werte zwischen 2 und 20 nm eingestellt werden kann.

EP 1470 859 A1 offenbart einen Katalysatorträger für die Abgasreinigung, der ein Kompositoxid und Titanoxidteilchen enthält. Das Kompositoxid enthält Teilchen, die eine feste Lösung aus Titanoxid in Aluminiumoxid bilden, und andere Oxidteilchen, z.B. eine feste Lösung aus Zirkonoxid und Titanoxid. Das Kompositoxid wird hergestellt, indem eine Lösung aus wasserlöslichen Verbindungen des Aluminiums, der Titans und des weiteren Elements X, z.B. Zr, mittels einer alkalischen Lösung gefällt werden. Nach einer Alterung wird der Niederschlag kalziniert.

REDDY B M ET AL: "X-ray photoelectron spectroscopy study of V2O5 dispersion on a nanosized Al2O3-TiO2 mixed oxide" LANGMUIR, ACS, WASHINGTON, DC, US, Bd. 17, Nr. 4, Februar2001 (2001-02), Seiten 11 32-11 37, XP002329970 ISSN: 0743-7463 offenbart Röntgenbeugung- und Photoelektronenspektroskopie-untersuchungen von Al₂O₃-TiO₂-Mischoxiden, die als Katalysatorträger für Vanadiumoxid verwendet werden. Diese Mischoxide werden durch eine Kofällung von Aluminium- und Titanvorläufern in wässriger Lösung gebildet. Als Fälligungsmittel wird Ammoniak aus Harnstoff in situ hergestellt und hydrolysiert die Aluminium- und Titanvorläufer langsam zu den entsprechenden Hydroxiden. Nach Abtrennung, Waschen und Trocknen werden diese bei 773 K für 6 Stunden kalziniert. Das Mischoxid hat eine gleichförmige Verteilung und eine BET-Oberfläche von 159 m²/g. Das XPS Ti/Al-Verhältnis von ca. 2,6 bei 773 K entspricht dem Molansatz von 1 Mol Al₂O₃ : 1,3 Mol TiO₂. In der Röntgenbeugung werden keine Aluminiumoxidreflexe und relativ breite Anatasreflexe gefunden.

EP 0 339 640 A offenbart die Herstellung von Aluminiumoxid-Titanoxid-Kompositen, indem eine kontrollierte Kofällung von Titansalzen, wie z.B. Titanylchlorid oder -sulfat, mit wasserlöslichen Aluminiumsalzen, wie z.B. Natrium- oder Kaliumaluminat oder Aluminiumchlorid, vorgenommen wird. Dabei wird der pH im Bereich von 4-10, vorzugsweise 6-9 gehalten. Titan wird dabei so homogen im Aluminiumoxid verteilt, dass keine Röntgenbeugungsreflexe des Titanoxids erhalten werden. Es liegt damit eine feste Lösung des Titanoxids im Aluminiumoxid vor.

U.GESENHUES, T.RENTSCHLER: "Crystal Growth and Defect Structure of AI3+-Doped Rutile" JOURNAL OF SOLID STATE CHEMISTRY, Bd. 143, 1999, Seiten 210-218, XP002443256 offenbart, dass Al³⁺ Gitterplätze des Ti⁴⁺ im Rutilgitter einnehmen kann. Bei höheren Gehalten an Al³⁺ wird dieses zusätzlich auf Zwischengitterplätzen und an der Oberfläche gefunden. Die Herstellung erfolgt, indem Metatitansäure mit bis zu 1 Gew.% hydratisiertem Aluminiumoxid vermischt und bei 930 bis 980°C geglüht wird. Die erfindungsgemäße Oxidmischung und das entsprechende Herstellungsverfahren sind nicht offenbart.

DE 36 33 030 A1 offenbart die Herstellung von Aluminium-Titanoxid-Compositpulver durch Flammenoxidation einer Dampfmischung von AlCl₃ und TiCl₄. Aus der reduzierten Gitterkonstante Co des Rutils wird auf eine partielle feste Lösung von Al₂O₃ in Rutil geschlossen, die bis zu 0,5 Gew% betragen kann. Neben dieser festen Lösung wird δ- und γ-Aluminiumoxid in Titanoxid, welches überwiegend als Rutil vorliegt, gefunden. Die erfindungsgemäße Oxidmischung und das entsprechende Herstellungsverfahren sind nicht offenbart.

WO 2005/065823 A offenbart die Herstellung von Komplexoxiden von Silizium und/oder Titan mit Aluminium. Zur Herstellung wird eine gemeinsame Lösung von Natriumsilikat und Natriumaluminat vorgelegt. Dann wird eine Titansulfatlösung zu einer Aluminiumsulfatlösung gegeben und diese gemeinsame Lösung innerhalb von 15 Minuten in die Natriumaluminatlösung getropft bis der pH-Wert bei 6.9-7.5 liegt. Der gebildete Niederschlag wird abfiltriert, und dann unter Rückfluss in einer verdünnten ammoniakalischen Lösung erhitzt. Die erfindungsgemäße Oxidmischung und das entsprechende Herstellungsverfahren sind nicht offenbart.

Allgemein anwendbare Verfahren zur Herstellung von aciden, mesoporösen Tierreichen TiO₂- Al₂O₃-Mischungen mit einheitlicher Porengröße aus wässrigen Ti- und Al-haltigen Lösungen ohne organische Verbindungen sind bisher nicht beschrieben.

Aufgabe der vorliegenden Erfindung ist es, die Nachteile des Standes der Technik zu überwinden.

Insbesondere ist es Aufgabe der vorliegenden Erfindung, eine katalytisch wirksame TiO₂-reiche Oxidmischung bereitzustellen, die feste Lösungen von Al₂O₃ und TiO₂ ineinander enthält. Eine weitere Aufgabe der Erfindung ist es, dass die Acidität der Oxidmischung eingestellt werden kann. Eine weitere Aufgabe der Erfindung ist es, dass die Oxidmischung vorzugsweise Mesoporen besitzen soll. Eine weitere Aufgabe der Erfindung ist es, dass die Oxidmischung vorzugsweise Mikroporen besitzen soll. Eine weitere Aufgabe der Erfindung ist es, dass die Poren der Oxidmischung vorzugsweise eine einheitliche Porengröße haben sollen. Eine weitere Aufgabe der Erfindung ist es, dass die Poren der Oxidmischung eine einstellbare Porengröße haben sollen.

Dabei soll das Verfahren zur Herstellung dieser erfindungsgemäßen Oxidmischung die Verwendung der teuren und gefährlichen organischen bzw. metallorganischen Verbindungen überflüssig machen.

Die erfindungsgemäße Oxidmischung soll als Katalysator und/oder Katalysatorträger verwendet werden können.

Weiterhin soll die erfindungsgemäße Oxidmischung in Systemen zur Stofftrennung, vorzugsweise als Packungsmaterial in Chromatographiesäulen verwendet werden können.

Weiterhin soll die erfindungsgemäße Oxidmischung bei einem technischen Produktionsverfahren in ein und demselben Apparat sowohl als Katalysator und/oder Katalysatorträger als auch als chromatographische feste Phase verwendbar sein.

Erfindungsgemäß wird die Aufgabe überraschenderweise durch die Merkmale des Hauptanspruchs gelöst. Vorzugsweise Ausgestaltungen finden sich in den Unteransprüchen.

Insbesondere wird die Aufgabe erfindungsgemäß durch eine mesoporöse, acide katalytisch wirksame Oxidmischung enthaltend mindestens eine feste Lösung von Al₂O₃ und TiO₂ ineinander, wobei die Oxidmischung 0,5 bis 45 Mol-%, bevorzugt 1 bis 40 Mol-%, besonders bevorzugt 2 bis 40 Mol-% Al und Poren mit einem Porendurchmesser d₅₀ nach BJH zwischen 2 und 50 nm, bevorzugt zwischen 2 und 40 nm, besonders bevorzugt zwischen 2 und 20 nm besitzt, wobei die spezifische Oberfläche der Oxidmischung nach BET zwischen 5 und 800 m²/g, bevorzugt zwischen 30 und 600 m²/g, besonders bevorzugt zwischen 50 und 450 m²/g beträgt, dadurch gekennzeichnet, dass die logarithmische Durchmesserverteilung der Poren eine Breite σ von höchstens 0,40, besonders bevorzugt zwischen 0,05 und 0,40 hat und die Teilchengröße d₅₀ der festen Lösung bei von 0,5 bis 10 µm liegt.

Insbesondere wird die Aufgabe erfindungsgemäß durch eine solche mikroporöse, acide katalytisch wirksame Oxidmischung gelöst, die zusätzlich Mikroporen mit einem Porendurchmesser d₅₀ zwischen 1 und 2 nm besitzt.

Die erfindungsgemäße Oxidmischung ist erhältlich durch das nachfolgend beschriebene erfindungsgemäße Verfahren. Überraschenderweise wurde gefunden, dass die erfindungsgemäße Oxidmischung insbesondere durch eine langsame Fällung erhältlich ist. Das erfindungsgemäße Verfahren zur Herstellung einer erfindungsgemäßen Oxidmischung ist dadurch gekennzeichnet, dass hydratisierten Vorformen von TiO₂ und Al₂O₃ aus wässrigen Ti- und Al-haltigen Lösungen ohne Verwendung von organischen oder metallorganischen Verbindungen gefällt werden, wobei eine alkalische AI-Lösung so langsam zur Ti-Lösung gegeben wird und anschließend der pH-Wert durch Zugabe von Basen, bevorzugt von basischen wässrigen Lösungen, besonders bevorzugt von wässrigen Lösungen von LiOH, NaOH, KOH oder NH₃, so langsam auf 4 bis 8, bevorzugt auf 6 bis 7 angehoben wird, dass die Fällgeschwindigkeit zwischen 30 und 1 g, bevorzugt zwischen 30 und 5 g, besonders bevorzugt zwischen 28 und 5 g Produkt (gerechnet als TiO₂ + Al₂O₃) pro L Ansatzvolumen und Stunde Fälldauer beträgt, und die Oxidmischung als Fällungsprodukt abgetrennt, vorzugsweise durch Filtration, ggf. gewaschen, vorzugsweise mit wässriger (NH₄)₂CO₃-Lösung, und ggf. getrocknet wird.Dabei bedeutet "langsam" im Sinne der Erfindung, dass die Fällgeschwindigkeit zwischen 30 und 1 g, bevorzugt zwischen 30 und 5 g, besonders bevorzugt zwischen 28 und 5 g Produkt (gerechnet als TiO₂ + Al₂O₃) pro L Ansatzvolumen und Stunde Fälldauer beträgt.

Als Fälldauer wird bei (a) die Dauer der Zugabe der Ti-Lösung verstanden, bei (b) die Dauer der Zugabe der AI-Lösung sowie der Lauge zum anschließenden Anheben des pH-Wertes. Unter Ansatzvolumen wird das Volumen der Suspension am Ende der Fällung verstanden. Das Mengenverhältnis von TiO₂ und Al₂O₃ in der erfindungsgemäßen Oxidmischung wird dabei über das Mengenverhältnis der zugegebenen Ti- und Al-haltigen Lösungen gesteuert.
- Die Oxidmischung wird als Fällungsprodukt abgetrennt, vorzugsweise durch Filtration, und gewaschen, vorzugsweise mit wässriger (NHa)₂CO₃-Lösung, um Nationen und SO₄²⁻-lonen zu verdrängen, da diese bei der Anwendung der Katalysatoren und Katalysatorträger stören: Nationen lassen bei Temperaturbeiastung die spezifische Oberfläche schrumpfen und beschleunigen die Umwandlung der bevorzugten Anatasmodifikation des TiO₂ in Rutil; SO4²⁻- Ionen können bei Anwendung in der Erdölchemie in den Produktstrom gehen, wo zum einen allgemein niedrige Schwefelgehalte gewünscht sind, und zum anderen sie mit Al₂O₃ zu Al₂(SO₄)₃ reagieren und dadurch den Katalysator desaktivieren können.
- Die gereinigte Oxidmischung wird getrocknet, evtl. geglüht oder HT-behandelt.

Überraschend wurde gefunden, dass die erfindungsgemäß langsame Zugabe einer wässrigen Ti- zu einer wässrigen AI-Lösung oder umgekehrt zu einer Oxidmischung führt, die auch noch nach Glühung oder HT-Behandlung Al₂O₃ und TiO₂ so fein miteinander vermischt enthält, dass zumindest zum Teil eine feste Lösung von Al₂O₃ und TiO₂ ineinander vorliegt. Weiterhin wurde überraschend gefunden, dass eine breite Verteilung des Porendurchmessers erhalten wird, wenn erfindungsgemäß gemäß (a) eine wässrige Ti- zu einer wässrigen AI-Lösung gegeben wird, und dass ein einheitlicher Porendurchmesser erhalten wird, der durch Glühung oder HT-Behandlung von 2 bis 3 nm auf bis zu 15 nm vergrößert werden kann, wenn gemäß (b) eine wässrige AI- zu einer wässrigen Ti-Lösung gegeben wird.

Dabei lassen sich überraschenderweise bei der erfindungsgemäß hergestellten katalytisch wirksamen Oxidmischung chemischer Vermischungsgrad sowie Porengröße und -einheitlichkeit unabhängig voneinander und vom Mengenverhältnis TiO₂/ Al₂O₃ einstellen.

Im Gegensatz dazu ergab eine Ausfällung von feinteiligem Al(OH)₃ und Titanoxidhydrat nacheinander im gleichen Behälter oder eine gleichzeitige schnelle Zusammengabe wässriger Ti- und Al-haltiger Lösungen bei einem pH-Wert im Neutralbereich Produkte, die nach Glühung oder HT-Behandlung gemäß XRD und REM mit EDX ein Gemenge aus Al₂O₃ und TiO₂ waren (DE-A-10352816).

Eine zusätzliche Dotierung der erfindungsgemäßen Oxidmischung mit weiteren Metallionen während oder nach der Herstellung ist mit Methoden gemäß dem Stand der Technik möglich, beispielsweise durch gelöste Metallsalze in der TiOSO₄-, Al₂(SO₄)₂- oder NaAlO₂-Lösung oder durch Imprägnieren mit Metallsalzlösungen nach Fällung und Trocknung (DE-A-10352816). Zusätzlich ist eine Belegung der erfindungsgemäßen Oxidmischung mit Übergangsmetalloxiden, beispielsweise von V und/oder Mo, mit Edelmetallen oder anderen VIIIB-Metallen oder ihren Sulfiden nach Stand der Technik möglich.

Die erfindungsgemäße Oxidmischung kann direkt nach der Fällung, nach der Trocknung, nach der Glühung oder nach der HT-Behandlung gemäß dem Stand der Technik nach üblicher Vorbehandlung zu Granulaten oder Formkörpern verarbeitet werden (DE-A-19913839).

Die erfindungsgemäße katalytisch wirksame Oxidmischung findet beispielsweise Verwendung als Katalysator bzw. Katalysatorträger in der Petrochemie, der organischen Grundchemie und der Olefinpolymerisation.

Gegenstand der Erfindung ist im Einzelnen:
Eine Oxidmischung enthaltend mindestens eine feste Lösung von Al₂O₃ und TiO₂ ineinander, wobei die Oxidmischung 0,5 bis 45 Mol-%, bevorzugt 1 bis 40 Mol-%, besonders bevorzugt 2 bis 40 Mol-% Al und Poren mit einem Porendurchmesser d₅₀ nach BJH zwischen 2 und 50 nm, bevorzugt zwischen 2 und 40 nm, besonders bevorzugt zwischen 2 und 20 nm besitzt, wobei die spezifische Oberfläche der Oxidmischung nach BET zwischen 5 und 800 m²/g, bevorzugt zwischen 30 und 600 m²/g, besonders bevorzugt zwischen 50 und 450 m²/g beträgt, dadurch gekennzeichnet, dass die logarithmische Durchmesserverteilung der Poren eine Breite σ von höchstens 0,40, besonders bevorzugt zwischen 0,05 und 0,40 hat und die Teilchengröße d₅₀ der festen Lösung bei von 0,5 bis 10 µm liegt.

Die erfindungsgemäße Oxidmischung, dadurch gekennzeichnet, dass das Porenvolumen der Oxidmischung nach BJH zwischen 0,02 und 2 cm³/g, bevorzugt 0,05 bis 1 cm³/g, besonders bevorzugt 0,05 bis 0,7 cm³/g beträgt.

Die erfindungsgemäße Oxidmischung, dadurch gekennzeichnet, dass das Porenvolumen der Oxidmischung zu 30 % bis 99 %, bevorzugt zu 50 % bis 99 %, besonders bevorzugt zu 70 bis 99 % durch Mesoporen gebildet wird.

Die erfindungsgemäße Oxidmischung, dadurch gekennzeichnet, dass das Porenvolumen der Oxidmischung zu 100 % durch Mesoporen gebildet wird.

Die erfindungsgemäße Oxidmischung, dadurch gekennzeichnet dass sie zusätzlich Mikroporen mit einem Porendurchmesser d₅₀ zwischen 1 und 2 nm besitzt.

Die erfindungsgemäße Oxidmischung, dadurch gekennzeichnet, dass die Teilchengröße d₅₀ der festen Lösung bei von 1 bis 5, bevorzugt von 1,2 bis 3,5 und besonders bevorzugt bei 1,5 bis 2,5 µm liegt.

Ein Verfahren zur Herstellung einer erfindungsgemäßen Oxidmischung, dadurch gekennzeichnet, dass hydratisierten Vorformen von TiO₂ und Al₂O₃ aus wässrigen Ti- und Al-haltigen Lösungen ohne Verwendung von organischen oder metallorganischen Verbindungen gefällt werden, wobei eine alkalische AI-Lösung so langsam zur Ti-Lösung gegeben wird und anschließend der pH-Wert durch Zugabe von Basen, bevorzugt von basischen wässrigen Lösungen, besonders bevorzugt von wässrigen Lösungen von LiOH, NaOH, KOH oder NH₃, so langsam auf 4 bis 8, bevorzugt auf 6 bis 7 angehoben wird, dass die Fällgeschwindigkeit zwischen 30 und 1 g, bevorzugt zwischen 30 und 5 g, besonders bevorzugt zwischen 28 und 5 g Produkt (gerechnet als TiO₂ + Al₂O₃) pro L Ansatzvolumen und Stunde Fälldauer beträgt, und die Oxidmischung als Fällungsprodukt abgetrennt, vorzugsweise durch Filtration, ggf. gewaschen, vorzugsweise mit wässriger (NH₄)₂CO₃-Lösung, und ggf. getrocknet wird.

Das erfindungsgemäße Verfahren, dadurch gekennzeichnet, dass es sich bei der wässrigen Ti-Lösung um eine wässrige Titanylchlorid-, -nitrat- oder -sulfatlösung handelt, die zwischen 50 und 400 g/L, bevorzugt zwischen 60 und 300 g/L, besonders bevorzugt zwischen 60 und 250 g/L Titan enthält.

Das erfindungsgemäße Verfahren, dadurch gekennzeichnet, dass es sich bei der wässrigen AI-Lösung um eine wässrige Alkalialuminatlösung handelt, die zwischen 50 und 350 g/L, bevorzugt zwischen 60 und 300 g/L, besonders bevorzugt zwischen 70 und 250 g/L Aluminium enthält.

Das erfindungsgemäße Verfahren, dadurch gekennzeichnet, dass die gereinigte und getrocknete Oxidmischung bei Temperaturen zwischen 350 und 900°C, bevorzugt zwischen 400 und 850 °C über einen Zeitraum zwischen 1 und 20 Stunden, bevorzugt zwischen 2 und 10 Stunden, besonders bevorzugt zwischen 2 und 6 Stunden geglüht wird.

Das erfindungsgemäße Verfahren, dadurch gekennzeichnet, dass die Oxidmischung bei Temperaturen von 100 bis 250 °C über einen Zeitraum zwischen 1 und 20 Stunden, bevorzugt zwischen 2 und 16 Stunden, besonders bevorzugt zwischen 2 und 6 Stunden hydrothermal- behandelt wird.

Die Verwendung einer erfindungsgemäßen Oxidmischung als Katalysator und/oder Katalysatorträger, bevorzugt in chemischen Katalyseverfahren, in der petrochemischen Industrie und/oder in der organischen Grundstoffsynthese, besonders bevorzugt beim (Hydro-)Cracken und/oder Entschwefeln von Naphtha und Schweröl, ganz besonders bevorzugt im fluid-catalytic-cracking- (FCC) und deep-catalytic- (DCC) - Verfahren für hochschwefelhaltige Rohstoffe sowie im HDS- (hydrodesuphurization) - Verfahren und beim Hydrieren aromatischer Bestandteile, beim Isomerisieren und/oder Dehydrieren von leicht siedenden Kohlenwasserstoffen, ganz besonders bevorzugt in der Erdölaufbereitung zur Erhöhung der Olefinausbeute sowie in der Butan- und Butenisomerisierung, in der Fischer-Tropsch-Synthese, ganz besonders bevorzugt zur Kohleverflüssigung, und/oder beim partiellen Oxidieren von gesättigten und ungesättigten Kohlenwasserstoffen, ganz besonders bevorzugt zu Essigsäure, Acrylsäure, Maleinsäure, Phthtal- und Terephthalsäure, in der Epoxidierung von langkettigen Olefinen, Terpenen und von Cyclohexan, sowie in der Hydroxylierung mehrkerniger Aromaten.

Die Verwendung einer erfindungsgemäßen Oxidmischung in Systemen zur Stofftrennung, vorzugsweise als Packungsmaterial in Chromatographiesäulen.

Die Verwendung einer erfindungsgemäßen Oxidmischung sowohl als Katalysator und/oder Katalysatorträger als auch als chromatographische feste Phase in ein und demselben Apparat bei einem technischen Produktionsverfahren.

Die nachfolgenden erfindungsgemäßen Beispiele 2 bis 6 sowie das nicht erfindungsgemäße Beispiel 1 sowie die Vergleichsbeispiele 1 und 2 sollen die Erfindung näher erläutern, ohne sie einzuschränken.

In den Beispielen wurden vom gereinigten und getrockneten Filterkuchen der erfindungsgemäßen Oxidmischung nach Fällung sowie der erfindungsgemäßen Oxidmischung nach Glühung bzw. HT-Behandlung folgende Untersuchungen gemacht:
- chemische Analyse auf Ti, Al, NH₄, Na und SO₄;
- Porosimetrie mit N₂-Sorption;
- Röntgendiffraktometrie auf vorhandene kristalline Verbindungen, das Verhältnis von Anatas und Rutil im TiO₂-Anteil der Probe und die Kristallitgröße des TiO₂ nach Scherrer;

Raster- und Transmissionselektronenmikroskopie mit Untersuchung der Verteilung von Ti und Al über EDX entlang von 100 bis 200 nm langen Linien über die Probe und in 5 bis 10 nm großen Flächenbereichen der Probe;
- Adsorption von Pyridin und IR-Spektroskopie,
- Teilchengrößenverteilung (kurz: TGV) zwischen 1 und 1000 µm mit Fraunhoferbeugung.

Die Porosimetrie-Methode wurde von der IUPAC standardisiert (Pure & Appl. Chem. 57 (1985) 603-619); bei den nachfolgend beschriebenen Beispielen wurde die Mikroporosität nach der t-Methode ausgewertet, die Mesoporosität nach der BJH-Methode (E. P. Barrett, L.G. Joyner und P.P. Halenda, J.Amer.Chem.Soc. 73 (1951) 373 ff). Die BJH-Auswertung liefert darüber hinaus Informationen für Porendurchmesser bis zu 200 bis 300 nm. Die mittlere Breite σ der Mesoporendurchmesserverteilung nach BJH wurde hier aus der Auftragung des kumulativen Porenvolumens gegen den Logarithmus des Porendurchmessers (Summenkurve der Verteilung) bestimmt, indem die Porendurchmesser d dort abgelesen wurden, wo das Porenvolumen 16, 50 und 84 % des Endwerts erreicht, wobei gilt: σ_ = In (d₅₀/d₁₆); σ₊ = In (d₈₄/d₅₀); σ = (σ₋ + σ₊)/2.

Röntgendiffraktogramme wurden mit Cu-Ka-Strahlung nach der Bragg-Reflexionsmethode aufgenommen, für die Zuordnung der Reflexe zu kristallinen Verbindungen wurden der Powder Diffraction File des Internat. Center for Diffraction Data von 1999 sowie bei Al-Oxiden die Ergebnisse von R. -S. Zhou und R. L. Snyder benutzt (Acta Cryst. B47 (1991) 617-630). Unter Übergangs-Al₂O₃ werden hier alle AbCb-Modifikationen außer α und θ verstanden.

Zur Adsorption von Pyridin und IR-Spektroskopie wurden die erhaltenen Pulver der erfindungsgemäßen Oxidmischung zu einem Pressung verpresst und in eine IR-Zelle mit CaF2-Fenstern überführt. Dort wurde im Gasdurchfluss die Probe getrocknet, Pyridin adsorbiert und dann durch Aufheizen bis 400°C wieder desorbiert, wobei alle 50°C ein IR-Spektrum aufgenommen wurde. Die Banden zwischen 1400 und 1700 cm⁻¹ zeigen molekular adsorbiertes Pyridin, brönsted- und lewissaure Zentren auf der Probenoberfläche sowie die Stärke der Lewiszentren an (G.Busca, Phys.Chem.Chem.Phys. 1 (1999) 723-736).

Zur Bestimmung der Teilchengrößenverteilung wurden die Proben 30 Sekunden in einer Laborschlagmühle der Fa. IKA homogenisiert und zerkleinert, dann in einer 0,1 bis 0,3%igen Lösung eines instantisierten Natriumpolyphosphats mittlerer Kettenlänge mit einem P₂O₅-Gehalt von ca. 64 %, beispielsweise Calgon N neu der Fa. BK Ladenburg, 5 Minuten magnetgerührt (kurz: 5'MR) bzw. zusätzlich 10 Minuten im Ultraschallbad dispergiert (kurz: 5'MR + 10'US), anschließend in einer HELOS-Apparatur der Fa. Sympatec, Clausthal mit einem 633 nm-Laserstrahl vermessen.

### Beispiel 1 (nicht erfindungsgemäß): Vorlage von NaAlO₂-Lösung, Zugabe von TiOSO₄-Lösung

Zu einer gerührten Vorlage von 117 mL einer wässrigen NaAlO₂-Lösung mit einem AI-Gehalt von 132 g/L, entsprechend einem Gehalt von 250 g/L Al₂O₃, werden gleichmäßig 1250 mL TiOSO₄-Lösung, welche 66 g/L Ti, entsprechend 110 g/L TiO₂, enthält, und mit 225 g/L H₂SO₄ stabilisiert ist, mit einer Geschwindigkeit von 10 mL pro Minute zugegeben. Die Mengenverhältnisse entsprechen einer Zusammensetzung der erfindungsgemäßen Oxidmischung von 25 Mol-% Al, Rest Ti. Bei Erreichen eines pH-Wertes von 7 in der Vorlage wird gleichzeitig 10 %ige Natronlauge so zugepumpt, dass dieser pH-Wert gehalten wird. Bei Zugabeende beträgt das Volumen 4,3 L. Die Fällgeschwindigkeit beträgt entsprechend diesen Angaben 18,6 g pro L und Stunde. Dann wird 1 Stunde nachgerührt, abgenutscht und mit 24 L (NH₄)₂CO₃-Lösung pro kg der Summe aus TiO₂ und Al₂O₃ im Ansatz gewaschen, wobei die Lösung eine Konzentration von 10 g/L hat. Die erfindungsgemäße Oxidmischung wird getrocknet. Je 10 g der Oxidmischung werden im Muffelofen 4 Stunden bei 450, 600 und 800°C geglüht und anschließend untersucht.
Die Ergebnisse sind in Tabelle 1 dargestellt. Eine Auswertung der Ergebnisse der XRD-, REM- und EDX-Analysen zeigt, dass in der erfindungsgemäßen Oxidmischung Al und Ti nach Glühung so fein miteinander vermischt sind, dass sich eine feste Lösung von TiO₂ und Al₂O₃ ineinander gebildet haben muss. Dabei kann in der erfindungsgemäßen Oxidmischung kristallines TiO₂ mit darin gelöstem Al₂O₃ (thermodynamisch einphasiges System) oder ein Gemenge von reinem kristallinem TiO₂ und einer amorphen festen Lösung von TiO₂ und Al₂O₃ ineinander (thermodynamisch zweiphasiges System) oder eine Mischung aus beiden Systemen vorliegen. Die Ergebnisse in Tabelle 1 zeigen weiter, dass die erfindungsgemäße Oxidmischung ungeglüht und geglüht für katalytische Anwendungen eine ausreichende spezifische Oberfläche und Porosität hat, die auch ausreichend temperaturstabil sind.

Analog werden erfindungsgemäße Oxidmischungen mit den Zusammensetzungen 40 Mol-%, 15 Mol-%, 7 Mol-% und 3 Mol-% Al, Rest jeweils Ti, hergestellt und untersucht. Die Ergebnisse sind in Tab. 7 dargestellt. Sie zeigen ähnliche Werte wie die erfindungsgemäße Oxidmischung mit 25 Mol-% Al für spezifische Oberfläche und Porenvolumen. Beide Größen nehmen mit steigendem TiO₂-Gehalt leicht und steigender Glühtemperatur stark ab, wobei das Porenvolumen aber stets größer ist als bei Sivakumar, Sibu, Mukundan et al. 2004 beschrieben. Diese vergrößerte Porenvolumen ist wertvoll für katalytische Anwendungen. Der Porendurchmesser aus der BJH-Auswertung (Mesoporen und Poren bis 200 nm) ist stets uneinheitlich, sowohl vor als auch nach Glühung. Uneinheitlich heißt, dass die Summenkurve der Porendurchmesserverteilung zwischen 2 und 200 nm fast linear verläuft, also kein Porendurchmesser signifikant häufiger vorkommt als andere. Al und Ti sind nach REM und EDX stets genauso fein wie vorher miteinander vermischt, und XRD zeigt für alle TiO₂-Al₂O₃-Mischungen vor Glühung und für Al₂O₃-reiche Mischungen auch noch nach Glühung bei niedriger Temperatur keine Reflexe, danach nur Anatasreflexe. Nur bei der TiO₂-reichsten Mischung werden bei der höchsten Glühtemperatur auch noch Rutilreflexe beobachtet.

Die Teilchengrößenverteilungen (kurz: TGV) der geglühten Proben waren stets bimodal, nach 5'MR betrug die maximale Teilchengröße ca. 200 µm, nach 5'MR + 10'US ca. 50 µm. In Tab. 1 und 7 ist die Menge Feinanteil angegeben, die des Grobanteils entspricht der Differenz zu 100%. Weiter sind die d₅₀-Werte von Feinund Grobanteil angegeben. Die Ergebnisse zeigen, dass die Primärteilchen aus der Fällung nach Glühung zunächst stets auf ca. 2 µm, unabhängig von Al₂O₃-Anteil, Glühtemperatur und Dispergierintensität, aggregiert und weiter auf 25 bis 55 µm (nach 5'MR) bzw. 10 bis 20 µm (nach 5'MR + 10'US) agglomeriert sind. Der Feinanteil steigt mit steigendem Al₂O₃-Gehalt der Proben, aber sinkt nicht mit steigender Glühtemperatur, was vorteilhaft ist.

### Beispiel 2: Vorlage von TiOSO₄-Lösung, Zugabe von NaAlO₂-Lösung, Neutralisation mit Natronlauge, Glühung

Zu einer gerührten Vorlage von 1250 mL TiOSO₄-Lösung werden 117 mL NaAlO₂-Lösung mit 5 mL pro Minute zugepumpt; beide Lösungen entsprechen denen in Beispiel 1. Die Mengenverhältnisse entsprechen einer Zusammensetzung der erfindungsgemäßen Oxidmischung von 25 Mol-% Al, Rest Ti. Danach liegt der pH-Wert unter 2. Anschließend wird 10 %ige Natronlauge bis zu einem pH-Wert von 2,5 mit 20 mL pro Minute und bis zu einem pH-Wert von 7 mit 10 mL pro Minute zugepumpt. Insgesamt sind 2930 mL nötig. Das Volumen des Ansatzes beträgt danach 4,3 L; die Fällgeschwindigkeit beträgt 10,5 g pro L und Stunde. Die erfindungsgemäße Oxidmischung wird wie in Beispiel 1 nachgerührt, filtriert, gewaschen, getrocknet, geglüht und untersucht.
Die Ergebnisse sind in Tabelle 1 dargestellt. Gemäß XRD, REM und EDX sind Al und Ti nach Glühung so fein miteinander vermischt, dass sich eine feste Lösung von TiO₂ und Al₂O₃ ineinander gebildet haben muss. Diese zerfällt bei hoher Temperatur in die reinen Oxide. Die Ergebnisse in Tabelle 1 zeigen weiter, dass das Material ungeglüht und schwach geglüht eine ausreichende spezifische Oberfläche und Porosität für katalytische Anwendungen hat. Die eingeschränkte Temperaturstabilität ist auf den hohen Na-Gehalt zurückzuführen. Auch der hohe SO₄-Gehalt kann nachteilig sein für Anwendungen in der Katalyse. Die Porendurchmesserverteilung nach BJH ist im Bereich 2 bis 200 nm unimodal und liegt im Mesoporenbereich, der Mesoporendurchmesser ist bei diesem Material einheitlich und wächst mit der Glühtemperatur. Dass die Produkte unimodale Mesoporen haben, heißt insbesondere, dass es in den Produkten keine Poren mit Durchmessern zwischen 50 und 200 nm gibt.

### Beispiel 3: Vorlage von TiOSO₄-Lösung, Zugabe von NaAlO₂-Lösung, Neutralisation mit NH₃-Lösung, Glühung

Der Versuch wird wie in Beispiel 2 durchgeführt, jedoch wird statt Natronlauge 15 %ige wässrige NH₃-Lösung mit 5 mL pro Minute zugegeben, bis ein pH-Wert von 7 erreicht ist. Außerdem werden vor der Filtration zwei Sedimentationswäschen gemacht, bei denen der Ansatz mit vollentsalztem Wasser auf 60 L aufgefüllt wird, 4 Stunden stehen gelassen wird und danach 40 L klaren Überstand abgehebert werden. Am Ende der Zugabe der NH₃-Lösung hat der Ansatz ein Volumen von 2,3 L, die Fällgeschwindigkeit beträgt in diesem Beispiel 21,4 g pro L und Stunde. Die Ergebnisse sind in Tabelle 1 dargestellt. Die Porendurchmesserverteilungen nach BJH entsprechen denen des vorangehenden Beispiels, auch die Verteilungen der Mesoporendurchmesser für das Fällprodukt und die Glühprodukte der erfindungsgemäßen Oxidmischung sind genau so eng; die Verteilungsbreite σ ist in Tabelle 2 in der Spalte für 25 Mol-% Al, Rest Ti angegeben. Die Ergebnisse zeigen zusammen mit REM und EDX:
- der Na-Gehalt im Produkt ist niedriger als in der Probe nach Beispiel 2; dadurch bleibt die spezifische Oberfläche bei höheren Temperaturen stabiler als bei den vorherigen Proben;
- Al und Ti sind nach Glühung fein miteinander vermischt; es hat sich eine feste Lösung von TiO₂ und Al₂O₃ gebildet, die auch bei hoher Temperatur nicht mehr in die reinen Oxide zerfällt;
- das Porenvolumen stammt von Mesoporen und nimmt durch Glühung ab;
- der Mesoporendurchmesser ist bei jeder Glühtemperatur einheitlich und kann durch die Temperatur zwischen 2 und 15 nm eingestellt werden.

Analog werden erfindungsgemäße Oxidmischungen mit den Zusammensetzungen 40 sol-%, 15 Mol-%, 7 Mol-% und 3 Mol-% Al, Rest jeweils Ti, hergestellt und untersucht. Die Ergebnisse sind in Tabelle 2. Bei keiner erfindungsgemäßen Oxidmischung sind selbst bei der höchsten Glühtemperatur im XRD die Rutilphase des TiO₂ und Al₂O₃-Modifikationen nachweisbar. Die feindisperse Verteilung von TiO₂ und Al₂O₃ ineinander ist gemäß TEM mit EDX auf Al und Ti entlang von 100 bis 200 nm langen Linien über die Probe und in 5 bis 10 nm großen Flächenbereichen der Probe selbst bei der erfindungsgemäßen Oxidmischung mit 40 Mol-% Al nach Glühung gewährleistet, das heißt, die geglühten erfindungsgemäßen Oxidmischungen bestehen entweder vollständig aus Anatas mit darin gelöstem Al₂O₃ (thermodynamisch eine Phase) oder aus Anatas und einer amorphen Lösung von Al₂O₃ und TiO₂ ineinander (thermodynamisch zwei Phasen). Die einheitliche Mesoporengröße ist schon im Fällungsprodukt angelegt (Tabelle 2) und bleibt bei der Glühung erhalten und lässt sich nahezu unabhängig vom Al/Ti-Verhältnis der Oxidmischung einstellen (Tabelle 2). Wie im vorangehenden Beispiel enthalten alle diese Produkte keine Poren mit Durchmessern zwischen 50 und 200 nm.

Die erfindungsgemäßen Oxidmischungen gemäß Tabelle 2 werden zusätzlich auf ihre Brönsted- und Lewis-Azidität mit Pyridin-Adsorption und IR-Spektroskopie untersucht. Die bei 600°C geglühten Proben zeigen erwartungsgemäß fast nur Lewisacidität. Die Oberflächenkonzentration der gesamten lewisaciden Zentren kann aus der Intensität der Bande bei 1445 cm⁻¹ nach Aufheizen im Spektrometer bis 100°C ermittelt werden, sie sinkt mit steigendem Al₂O₃-Gehalt der Proben. Der Abfall ist auf das Verschwinden der schwach sauren Zentren zurückzuführen, die Konzentration der stark sauren Zentren bleibt gleich, wie die Intensität der Bande bei 1445 cm⁻¹ nach Aufheizen im Spektrometer bis 400°C und die Entwicklung der drei Einzelbanden um 1600 cm⁻¹ beim Aufheizen zeigt. Die mittlere Acidität der Oberflächenzentren steigt also mit dem Al₂O₃-Gehalt der Proben.

Die Teilchengrößenverteilungen sind bimodal mit einer maximalen Teilchengröße von ca. 100 µm nach 5'MR + 10'US. Anders als in Beispiel 1 ist (nach 5'MR + 10'US) der Feinanteil geringer, er sinkt aber ebenfalls mit steigendem TiO₂-Gehalt der Produkte.

### Beispiel 4: HT-Behandlung statt Glühung

Der Versuch wird wie in Beispiel 3 durchgeführt, jedoch werden die Filterkuchen der erfindungsgemäßen Oxidmischung mit deionisiertem Wasser auf 8 bis 11% Feststoff angeschlämmt und die Suspensionen in einem Stahlautoklaven 2 bis 16 Stunden bei 120 bis 180°C hydrothermal behandelt. Die erfindungsgemäße Oxidmischung wird abfiltriert, getrocknet und untersucht.

Die Ergebnisse sind in den Tabellen 3 bis 5 dargestellt:
- auch mit einer HT-Behandlung statt Glühung lassen sich Mesoporen einheitlicher Größe erzeugen, wobei die Durchmesserverteilung der Mesoporen allerdings nicht so eng ist wie bei Proben, die geglüht wurden;
- die Mesoporendurchmesser lassen sich auch mit einer HT-Behandlung im gewünschten Bereich von 2 bis 15 nm einstellen;
- zur Einstellung des Mesoporendurchmessers können gleichwertig Temperatur und Dauer der HT-Behandlung benutzt werden;
- im Durchmesserbereich von 50 bis 200 nm gibt es wie im vorherigen Beispiel keine Poren;
- die in der Fällung erzeugte feste Lösung von Al₂O₃ und TiO₂ ineinander ist bei hohen Al₂O₃-Gehalten gegenüber einer HT-Behandlung nicht ganz so beständig wie gegenüber einer Glühung;
- die HT-Behandlung erzeugt ein größeres Porenvolumen als die Glühung; es hängt nicht vom Al₂O₃-Gehalt ab und ist thermisch stabil: dies ist für die Verwendung der erfindungsgemäßen Oxidmischung als Katalysator bzw. Katalysatorträger bei Einsatz unter Temperaturbelastung und im Besonderen für die Herstellung von Katalysatoren bzw. Katalysatorträgern mit niedrigem Al₂O₃-Gehalt vorteilhaft;
- die Teilchengrößenverteilungen sind wie in Beispiel 3 bimodal, und die maximale Teilchengröße liegt bei ca. 50 µm; jedoch ist (nach 5'MR + 10'US) der Feinanteil höher, und mit sinkendem Al₂O₃-Gehalt wächst der Feinanteil und sinkt der mittlere Feinkorndurchmesser;

### Beispiel 5: Verwendung einer konzentrierten TiOSO₄-Lösung zur Fällung

Der Versuch wird wie in Beispiel 3 durchgeführt, jedoch werden 490 mL TiOS0₄-Lösung mit 280 g/L TiO₂ und 575 g/L H₂SO₄ statt 1250 mL TiOSO₄-Lösung mit 110 g/L TiO₂ und 225 g/L H₂SO₄ vorgelegt. Die NH₃-Lösung wird außerdem nur mit 3 mL pro Minute zugepumpt. Danach beträgt das Volumen des Ansatzes 1,5 L. Die Fällgeschwindigkeit beträgt 20 g pro L und Stunde.

Die Eigenschaften der Oxidmischung nach Trocknung und Glühung sind in Tabelle 6 wiedergegeben. Die Ergebnisse sind zu vergleichen mit denen von TiO₂/Al₂O₃ mit 25 Mol-% Al, Rest Ti, in Tabelle 2.

Danach verschlechtert die Fällung mit einer höheren Konzentration der TiOSO₄-Lösung die Qualität der Oxidmischung nur geringfügig. Fällungen mit höher konzentrierten Lösungen erlauben eine höhere Raum-Zeit-Ausbeute und sind daher wirtschaftlich zu bevorzugen.

### Beispiel 6: Zusätzliche Verwendung einer konzentrierteren NaAlO₂-Lösung

Der Versuch wird wie in Beispiel 5 durchgeführt, jedoch werden 89 mL NaAlO₂-Lösung mit 330 g/L Al₂O₃ statt 117 mL NaAlO₂-Lösung. mit 250 g/L Al₂O₃ zugepumpt. Die Fällgeschwindigkeit beträgt 21 g pro L und Stunde.

Die Eigenschaften der Oxidmischung nach Trocknung und Glühung sind in Tabelle 6 wiedergegeben. Die Ergebnisse sind zu vergleichen mit denen von TiO₂/Al₂O₃ mit 25 Mol-% Al, Rest Ti, in Tabelle 2. Danach verschlechtert die Fällung mit einer höheren Konzentration der NaAlO₂-Lösung die Qualität der Oxidmischung nur geringfügig.

### Vergleichsbeispiel 1: Auffällung einer TiO₂-Vorfor auf vorgefertigte feindisperse Al₂O₃-Teilchen

In einem 6 L-Rundkolben mit KPG-Rührer, Rückflußkühler, Kontaktthermometer und Heizpilz werden 1,5L H₂O und 40 g eines kommerziellen Aluminiumoxids mit einer spezifischen Oberfläche von 104 m²/g (pyrogen, Primärteilchengröße ca. 15 nm, nicht agglomeriert, gemäß Röntgendiffraktogramm in der δ-Modifikation nach Herstellerangaben, in der γ- oder η-, aber noch nicht θ-Modifikation nach Zhou und Snyder) unter Rühren vorgelegt. Bei 90°C werden gleichmäßig über 180 Minuten 1710 mL TiOSO₄-Lösung zugegeben, welche 66 g/L Ti, entsprechend 110 g/L TiO₂, enthält und mit 225 g/L H₂SO₄ stabilisiert ist. Die Mengenverhältnisse entsprechen einer Zusammensetzung der Oxidmischung von 25 Mol-% Al, Rest Ti. Dann wird 30 Minuten gekocht, anschließend filtriert, mit H₂O gewaschen und getrocknet. Je 10 g des Produkts werden im Muffelofen 4 Stunden bei 450, 600 und 800°C geglüht und untersucht.
Im XRD der Glühprodukte ist das Intensitätsverhältnis der Reflexe von Aluminiumoxid bei 2θ = 46° und von Anatas bei 2θ = 48° stets auf ±4% genau gleich mit einem mechanisch hergestellten Gemenge aus dem Aluminiumoxidedukt und einem chemisch reinen, nicht oberflächenmodifizierten Anatas-Weißpigment nach dem Sulfatverfahren mit 25 Mol-% Al, Rest Ti. Weitere Ergebnisse sind in Tabelle 1 dargestellt. Sie zeigen, dass sich keine Lösung von Al₂O₃ und TiO₂ ineinander gebildet hat. Eine Umwandlung von Anatas in Rutil wird nicht beobachtet.

Das Beispiel belegt, dass sich ohne molekulardisperse Vormischung, selbst wenn die eine Komponente in dünner glatter Schicht auf die Teilchen der anderen Komponente aufgefällt wird, bei Glühung nur Gemenge von TiO₂ und Al₂O₃ bilden.

Außerdem ist das Produkt aus diesem Vergleichsbeispiel nach Tab. 1 so feinteilig (überwiegend < 1 µm), dass seine Verarbeitbarkeit, beispielsweise bei wash-coat-Verfahren in der Katalysatorherstellung erschwert ist.

### Vergleichsbeispiel 2: Auffällung einer Al₂O₃-Vorform auf Teilchen einer vorgefertigten TiO₂-Vorform

In einem 6 L-Rundkolben mit KPG-Rührer, Rückflußkühler, Kontaktthermometer und Heizpilz werden 2,00 L Suspension einer gewaschenen, aber noch nicht gebleichten Metatitansäure aus dem Sulfatverfahren für TiO₂-Pigmente mit einem Gehalt von umgerechnet 356 g/L TiO₂ vorgelegt und innerhalb von 45 Minuten 498 mL Natriumaluminatlösung mit einem Gehalt von umgerechnet 304 g/L Al₂O₃ zugegeben. Die Mengenverhältnisse entsprechen einer Zusammensetzung der Oxidmischung von 25 Mol-% Al, Rest Ti. Am Ende der Zugabe beträgt der pH-Wert 10,7. Nun wird 2 Stunden gekocht. Anschließend wird mit 20 %-iger Schwefelsäure innerhalb von 30 Minuten neutral gestellt, filtriert, mit H₂O gewaschen und getrocknet. Je 10 g des Produkts werden im Muffelofen 4 Stunden bei 450, 600 und 800°C geglüht und untersucht.
Mit REM und EDX sind neben den Aggregaten der submikrometergroßen Primärteilchen der Metatitansäure beim ungeglühten Produkt mehrere Mikrometer lange Prismen zu sehen, beim geglühten Produkt kantige Körnchen mit fast glatter Oberfläche von ca. 1,5 µm Größe. Prismen und kantige Körnchen enthalten nur Al, aber kein Ti. Die XRD-Ergebnisse in Tabelle 1 und die REM-Untersuchungen zeigen, daß AI- und Ti-Ausgangskomponenten schon vor der Fällung molekulardispers gemischt sein müssen, damit sich feste Lösungen von Al₂O₃ und TiO₂ ineinander bilden. Weitere Ergebnisse sind in Tabelle 1 dargestellt.

Die Teilchengrößenverteilung dieses Produkts (Tab. 1) ist fast unimodal und seine mittlere Teilchengröße so, dass es in wash-coat-Verfahren ohne vorherige Mahlung auf Katalysatorformkörper aufgebracht werden kann.

Tabelle 1: Produkte aus TiO₂/Al₂O₃ mit 25 Mol-% Al, Rest Ti, Einfluss der Wahl der Ausgangsmaterialien und des Verfahrens für Fällung und Waschung:

**Tabelle 1 a: nach Trocknung:**

| | Vergleichsbeispiel 1 | Vergleichsbeispiel 2 | Beispiel 1 | Beispiel 2 | Beispiel 3 |
|---|---|---|---|---|---|
| % NH₄ | | | | - | 1,5 |
| ppm Na | | 13000 | 2100 | 26000 | 60 |
| % SO₄ | | <0,01 | 0,03 | 4,5 | 0,71 |
| BET (davon in Mikroporen) [m²/g] | 173 | 196 (7) | 424 (279) | 296 (190) | 417 (35) |
| Porenvolumen (davon in Mesoporen [cm³/g] | | 0,29 | 0,64 (0,47) | 0,19 (0,07) | 0,36 (0,33) |
| Mesoporendurchmesser [nm] | | keiner bevorzugt | keiner bevorzugt | monomodal 3,3 | monomodal 2,7 |
| gefundene kristalline Verbindungen | Übergangs-Al₂O₃ | Anatas, Al(OH)₃ Bayerit | - (amorph) | - (amorph) | (amorph) |

**Tabelle 1b: geglüht bei 450°C:**

| | Vergleichsbeispiel 1 | Vergleichsbeispiel 2 | Beispiel 1 | Beispiel 2 | Beispiel 3 |
|---|---|---|---|---|---|
| BET (davon in Mikroporen) [m²/g] | 121 | 102 | 249 (0) | 157 (0) | 282 (0) |
| Porenvolumen [cm³/g] | | | 0,65 | 0,17 | 0,30 |
| Mesoporendurchmesser [nm] | | | kleine bevorzugt | monomodal 3,8 | monomodal 3,6 |
| gefundene kristalline Verbindungen | Anatas, Übergangs-Al₂O₃ | Anatas, AIOOH Boehmit, η-Al₂O₃ | - (amorph) | Anatas | - (amorph) |
| Anataskristallitgröße [nm] | 11 | 12 | | | |
| TGV nach 5'MR: Menge [%] / d₅₀ [µm] des Feinanteils | 93 / < 1 | 97 / 3,5 | 40 / 1,8 | | |
| TGV nach 5'MR: d₅₀ [µm] des Grobanteils | 22 | ca. 20 | 42 | | |
| TGV nach 5'MR+ 10'US: Menge [%] / d₅₀ [µm] des Feinanteils | 95 / < 1 | 97 / 2,4 | 67 / 1,9 | | 45 / 2,2 |
| TGV nach 5'MR + 10'US: d₅₀ [µm] des Grobanteils | 15 | ca. 20 | 17 | | 30 |

**Tabelle 1 c: geglüht bei 600°C:**

| | Vergleichsbeispiel 1 | Vergleichsbeispiel 2 | Beispiel 1 | Beispiel 2 | Beispiel 3 |
|---|---|---|---|---|---|
| Gewichtsverlust [%] | 14,2 | 10,8 | 16,7 | 12,1 | 14,7 |
| BET (davon in Mikroporen) [m²/g] | 103 | 85 | 98 (0) | 71 (0) | 167 (0) |
| Porenvolumen [cm³/g] | | | 0,48 | 0,15 | 0,24 |
| Mesoporendurchmesser [nm] | | | keiner bevorzugt | monomodal 6,1 | monomodal 4,5 |
| gefundene kristalline Verbindungen | Anatas, Übergangs-Al₂O₃ | Anatas, η-Al₂O₃ | Anatas | Anatas | Anatas |
| Anataskristallitgröße [nm] | 15 | 18 | 11 | 9 | 6 |
| TGV nach 5'MR: Menge [%] / d₅₀ [µm] des Feinanteils | 89 < 1 | 92 / 4,2 | | | |
| TGV nach 5'MR: d₅₀ [µm] des Grobanteils | 22 | 19 | | | |
| TGV nach 5'MR + 10'US: Menge [%] / d₅₀ [µm] des Feinanteils | 90 / < 1 | 92 / 3,8 | | | |
| TGV nach 5'MR + 10'US: d₅₀ [µm] des Grobanteils | 20 | 16 | | | |

**Tabelle 1 d: geglüht bei 800°C:**

| | Vergleichsbeispiel 1 | Vergleichsbeispiel 2 | Beispiel 1 | Beispiel 2 | Beispiel 3 |
|---|---|---|---|---|---|
| BET (davon in Mikropo-ren) [m²/g] | 96 | 57 (0) | 49 (6) | 30 | 68 (0) |
| Porenvolumen [cm³/g] | | 0,25 | 0,36 | - | 0,18 |
| Mesoporendurchmesser [nm] | | keiner bevorzugt | große bevorzugt | - | monomodal 7,8 |
| gefundene kristalline Verbindungen | Anatas, Übergangs-Al₂O₃ | Anatas, η-Al₂O₃ | Anatas | Anatas, Übergangs-Al₂O₃ | Anatas |
| Anataskristallitgröße [nm] | 24 | 27 | 18 | 23 | 14 |

**Tabelle 2: Produkte aus TiO₂/Al₂O₃ unterschiedlicher Zusammensetzung nach dem Glühverfahren (Beispiel 3):**

| Tabelle 2a: nach Trocknung: | | | | | |
|---|---|---|---|---|---|
| Mol-% Al, Rest Ti | 40 | 25 | 15 | 7 | 3 |
| % NH₄ | 1,2 | 1,5 | 2,0 | 3,1 | 3,4 |
| ppm Na | 80 | 60 | 370 | 170 | 110 |
| % SO₄ | 3,9 | 0,71 | 0,24 | 0,06 | 0,03 |
| BET (davon in Mikroporen) [m²/g] | 415 (76) | 417 (35) | 411 (44) | 393 (34) | 356 (26) |
| Porenvolumen (davon in Mesoporen [cm³/g] | 0,29 (0,25) | 0,36 (0,33) | 0,28 (0,24) | 0,26 (0,20) | 0,25 (0,20) |
| Mesoporen: d₅₀ [nml / ±σ [-] | 2,7 / 0,38 | 2,7 / 0,37 | 2,7 / 0,37 | 2,6 / 0,36 | 2,7 / 0,38 |
| gefundene kristalline Verbindungen | - (amorph) | - (amorph) | - (amorph) | - (amorph) | - (amorph) |

**Tabelle 2b: geglüht bei 450°C:**

| Mol-% Al, Rest Ti | 40 | 25 | 15 | 7 | 3 |
|---|---|---|---|---|---|
| Gewichtsverlust [%] | 15,1 | 13,1 | 14,7 | 13,4 | 10,4 |
| BET (davon in Mikroporen) [m²/g] | 275 (0) | 282 (0) | 232 (0) | 148 (0) | 110 (0) |
| Porenvolumen (davon in Mesoporen [cm³/g] | 0,30 (0,27) | 0,30 (0,27) | 0,25 (0,24) | 0,19(0,20) | 0,17 (0,17) |
| Mesoporen: d₅₀ [nml / ±σ [-] | 3,6 / 0,09 | 3,6 / 0,07 | 3,6 / 0,10 | 4,0 / 0,12 | 4,7 / 0,15 |
| gefundene kristalline Verbindungen | - (amorph) | (amorph) | Anatas | Anatas | Anatas |
| Anataskristallit große [nm] | | | 4 | 7 | 10 |
| TGV nach 5'MR + 10'US: Menge [%] / d₅₀ [µm] des Feinanteils | 55 /2,3 | | | | |
| TGV nach 5'MR + 10'US: d₅₀ [µm] des Grobanteils | 25 | | | | |

**Tabelle 2c: geglüht bei 600°C:**

| Mol-% Al, Rest Ti | 40 | 25 | 15 | 7 | 3 |
|---|---|---|---|---|---|
| Gewichtsverlust [%] | 16,8 | 14,7 | 15,9 | 14,4 | 10, 7 |
| BET (davon in Mikroporen) [m²/g] | 185 (0) | 167 (0) | 121 (0) | 96 (0) | 66 (0) |
| Porenvolumen (davon in Mesoporen [cm³/g] | 0,26 (0,28) | 0,24 (0,25) | 0,21 (0,22) | 0,17 (0,18) | 0,14 (0,15) |
| Mesoporen: d₅₀ [nml / ±σ [-] | 4,3 / 0,12 | 4,5 / 0,14 | 5,5 / 0,14 | 5,8 / 0,15 | 6,3 / 0,14 |
| gefundene kristalline Verbindungen | Anatas | Anatas | Anatas | Anatas | Anatas |
| Anataskristallit große [nm] | 5 | 6 | 7 | 8 | 12 |
| TGV nach 5'MR + 10'US: Menge [%] / d₅₀ [µm] des Feinanteils | 52 / 2,5 | 45 / 2,2 | 44 / 2,7 | 40 / 2,5 | 30 / 3,1 |
| TGV nach 5'MR + 10'US: d₅₀ [µm] des Grobanteils | 28 | 30 | 27 | 23 | 25 |

**Tabelle 2d: geglüht bei 800°C:**

| Mol-% Al, Rest Ti | 40 | 25 | 15 | 7 | 3 |
|---|---|---|---|---|---|
| Gewichtsverlust [%] | 19,3 | 15,3 | 16,2 | 14,6 | 10,8 |
| BET (davon in Mikroporen) [m²/g] | 94 (0) | 68 (0) | 43 (0) | 31 | 17 |
| Porenvolumen (davon in Mesoporen [cm³/g] | 0,21 (0,22) | 0,18(0,18) | 0,15 (0,15) | 0,10 (0,10) | 0,06 (0,06) |
| Mesoporen: d₅₀ [nml / ±σ [-] | 6,9 / 0,11 | 7,8 / 0,11 | 10,5 / 0,13 | 10,0 / 0,16 | 8,3 / 0,21 |
| gefundene kristalline Verbindungen | Anatas | Anatas | Anatas | Anatas | Anatas |
| Anataskristallit größe [nm] | 10 | 14 | 19 | 21 | 26 |
| TGV nach 5'MR + 10'US: Menge [%] / d₅₀ [µm] des Feinanteils | 45 / 3,4 | | | | |
| TGV nach 5'MR + 10'US: d₅₀ [µm] des Grobanteils | 36 | | | | |

Tabelle 3: Produkte aus TiO₂/Al₂O₃ unterschiedlicher Zusammensetzung nach dem HT-Verfahren:

**Tabelle 3a: allg. Eigenschaften nach 4h HT-Behandlung bei 180°C (Beispiel 4):**

| Mol-% Al, Rest Ti | 40 | 25 | 15 | 7 | 3 |
|---|---|---|---|---|---|
| % NH₄ | 0,29 | 0,21 | 0,18 | 0,21 | 0,14 |
| ppm Na | 120 | 70 | 120 | 90 | 100 |
| % SO₄ | 0,8 | <0,05 | <0,05 | <0,05 | <0,05 |
| BET (davon in Mikroporen) [m²/g] | 152 (0) | 135 (0) | 158 (0) | 147 (0) | 114 (0) |
| Porenvolumen (davon in Mesopoen [cm³/g] | 0,37 (0,37) | 0,34 (0,34) | 0,37 (0,37) | 0,39 (0,39) | 0,36 (0,36) |
| gefundene kristalline Verbindungen | Anatas, Boehmit | Anatas, wenig Boehmit | Anatas | Anatas | Anatas |
| Anataskristallit größe [nm] | 8 | 10 | 9 | 9 | 12 |
| TGV nach 5'MR: Menge [%] / d₅₀ [µm] des Feinanteils | 46 / 3,1 | 50 / 2,7 | 51 / 2,0 | 53 / 1,4 | 49 / < 1 |
| TGV nach 5'MR: d₅₀ [µm] des Grobanteils | 19 | 18 | 15 | 17 | 12 |
| TGV nach 5'MR+10'US: Menge [%] / d₅₀ [µm] des Feinanteils | 62 / 3,0 | 65 / 3,0 | 63 / 1,6 | 67 / < 1 | 78 / < 1 |
| TGV nach 5'MR + 10'US: d₅₀ [µm] des Grobanteils | 16 | 13 | 15 | 14 | 11 |

**Tabelle 3b: zusätzlich 1 h geglüht bei 600°C:**

| Mol-% Al, Rest Ti | 40 | 25 | 15 | 7 | 3 |
|---|---|---|---|---|---|
| Gewichtsverlust [%] | 8,5 | 7,0 | 5,6 | 4,0 | 3,4 |
| BET (davon in Mikroporen) [m²/g] | 102 (0) | 139 (0) | 138 (0) | 128 (0) | 122 (0) |
| Porenvolumen (davon in Mesoporen [cm³/g] | 0,34 (0,34) | 0,38 (0,38) | 0,34 (0,34) | 0,35 (0,35) | 0,37 (0,37) |
| gefundene kristalline Verbindungen | Anatas, η-bzw. γ-Al₂O₃ | Anatas, wenig η-bzw. γ-Al₂O₃ | Anatas | Anatas | Anatas |
| Anataskristallit größe [nm] | 9 | 10 | 10 | 10 | 12 |

**Tabelle 4: Produkte aus TiO_{2/}Al₂O₃ unterschiedlicher Zusammensetzung nach dem HT-Verfahren, Verteilung der Mesoporendurchmesser als Funktion der HT-Behandlungstemperatur (Beispiel 4); d₅₀ in nm / ±σ ohne Dimension:**

| Mol-% Al, Rest Ti | 40 | 25 | 15 | 7 | 3 |
|---|---|---|---|---|---|
| nach Trocknung | 2,7 / 0,38 | 2,7 / 0,37 | 2,7 / 0,37 | 2,6 / 0,36 | 2,7 / 0,38 |
| 4h bei 120°C HT-behandelt | 5,5 / 0,20 | 5,0 / 0,21 | 4,7 / 0,19 | 5,9 / 0,23 | |
| 4h bei 150°C HT-behandelt | 7,0 / 0,24 | 6,2 / 0,23 | 6,4 / 0,22 | 7,1 / 0,23 | |
| 4h bei 180°C HT-behandelt | 8,5 / 0,28 | 9,5 / 0,29 | 8,5 / 0,26 | 10,0 / 0,26 | 11,5 / 0,25 |

**Tabelle 5: Produkt aus TiO₂/Al₂O₃ mit 40 Mol-% Al, Rest Ti, Einfluss der Dauer der HT-Behandlung bei 150°C (Beispiel 4):**

| Dauer in h | 0 | 2 | 4 | 8 | 16 |
|---|---|---|---|---|---|
| BET (davon in Mikroporen) [m²/g] | 415 (76) | 243 (0) | 198 (0) | 203 (0) | 158 (0) |
| Porenvolumen [cm³/g] | 0,29 | 0,39 | 0,37 | 0,37 | 0,38 |
| Mesoporen: d₅₀ [nm] | 2,7 | 5,8 | 7,0 | 6,8 | 8,8 |
| gefundene kristalline Verbindungen | - (amorph) | | | | Anatas, Boehmit |
| Anataskristallit größe [nm] | | | | | 9 |

Tabelle 6: Produkte aus TiO_{2/}Al₂O₃ mit 25 Mol-% Al, Rest Ti: Einfluss der Konzentrationen der zur Fällung benutzten Ti- und AI-Lösungen (Beispiele 5 und 6):

**Tabelle 6a: nach Trocknung:**

| | Beispiel 5 | Beispiel 6 |
|---|---|---|
| % NH₄ | 1,1 | 0,9 |
| ppm Na | 260 | 340 |
| % SO₄ | 1,1 | 1,3 |
| BET (davon in Mikroporen) [m²/g] | 329 (132) | 338 (143) |
| Porenvolumen (davon in Mesoporen [cm³/g] | 0,32 (0,28) | 0,29 (0,22) |
| Mesoporen: d₅₀ [nml / ±σ [-] | 3,3 / 0,44 | 4,1 / 0,42 |
| gefundene kristalline Verbindungen | - (amorph) | - (amorph) |

**Tabelle 6b: geglüht bei 450°C:**

| | Beispiel 5 | Beispiel 6 |
|---|---|---|
| BET (davon in Mikropo-ren) [M²/g] | 237 (0) | 214 (0) |
| Porenvolumen (davon in Mesoporen [cm³/g] | 0,26 (0,27) | 0,23 (0,22) |
| Mesoporen: d₅₀ [nml / ±σ [-] | 4,6 / 0,18 | 5,8 / 0,23 |
| gefundene kristalline Verbindungen | - (amorph) | Anatas |
| Anataskristallit größe [nm] | | 6 |

**Tabelle 6c: geglüht bei 600°C:**

| | Beispiel 5 | Beispiel 6 |
|---|---|---|
| BET (davon in Mikropo-ren) [m²/g] | 136 (0) | 119 (0) |
| Porenvolumen (davon in Mesoporen [cm³/g] | 0,19 (0,20) | 0,17 (0,15) |
| Mesoporen: d₅₀ [nml / +σ [-] | 7,4 / 0,19 | 8,6 / 0,22 |
| gefundene kristalline Verbindungen | Anatas | Anatas |
| Anataskristallit größe [nm] | 8 | 10 |

Tabelle 7: Produkte aus TiO₂/Al₂O₃ unterschiedlicher Zusammensetzung nach dem Glühverfahren (Beispiel 1):

**Tabelle 7a: nach Trocknung:**

| Mol-% Al, Rest Ti | 40 | 25 | 15 | 7 | 3 |
|---|---|---|---|---|---|
| ppm Na | 2000 | 2100 | 5900 | 7500 | 1300 |
| % SO₄ | 0,09 | 0,03 | 0,03 | 0,03 | 0,03 |
| BET (davon in Mikroporen) [m²/g] | 406 (220) | 424 (279) | 433 (310) | 410(270) | 389 (240) |
| Porenvolumen (davon in Mesoporen [cm³/g] | 0,61 (0,46) | 0,64 (0,47) | 0,54 (0,36) | 0,68 (0,52) | 0,88 (0,75) |
| gefundene kristalline Verbindungen | - (amorph) | - (amorph) | - (amorph) | - (amorph) | - (amorph) |

**Tabelle 7b: geglüht bei 450°C:**

| Mol-% Al, Rest Ti | 40 | 25 | 15 | 7 | 3 |
|---|---|---|---|---|---|
| Gewichtsverlust [%] | 22,1 | 15,1 | 15,6 | 19,9 | 16,1 |
| BET (davon in Mikroporen) [m²/g] | 274 (0) | 249 (0) | 235 (20) | 72 (0) | 67 (5) |
| Porenvolumen [cm³/g] | 0,50 | 0,65 | 0,75 (0,71) | 0,52 | 0,66 |
| gefundene kristalline Verbindungen | - (amorph) | - (amorph) | - (amorph) | Anatas | Anatas |
| Anataskristallit größe [nm] | | | | 15 | 16 |
| TGV nach 5'MR: Menge [%] / d₅₀ [µm] des Feinanteils | 50 / 2,1 | | | | |
| TGV nach 5'MR: d₅₀ [µm] des Grobanteils | 30 | | | | |
| TGV nach 5'MR + 10'US: Menge [%] / d₅₀ [µm] des Feinanteils | 70 / 2,1 | | | | |
| TGV nach 5'MR + 10'US: d₅₀ [µm] des Grobanteils | 14 | | | | |

**Tabelle 7c: geglüht bei 600°C:**

| Mol-% Al, Rest Ti | 40 | 25 | 15 | 7 | 3 |
|---|---|---|---|---|---|
| Gewichtsverlust [%] | 24,0 | 16,7 | 15,8 | 19,9 | 16,5 |
| BET (davon in Mikroporen) [m²/g] | 164 (0) | 98 (0) | 80 (0) | 61 (3) | 53 (6) |
| Porenvolumen [cm³/g] | 0,45 | 0,48 | 0,48 | 0,64 | 0,55 |
| gefundene kristalline Verbindungen | Anatas | Anatas | Anatas | Anatas | Anatas |
| Anataskristallit größe [nm] | 11 | 11 | 13 | 16 | 18 |
| TGV nach 5'MR: Menge [%] / d₅₀ [µm] des Feinanteils | 54 / 2,0 | 40 / 1,8 | 40 /1,8 | 27 / 2,0 | 17 / 2,0 |
| TGV nach 5'MR: d₅₀ [µm] des Grobanteils | 28 | 42 | 53 | 42 | 42 |
| TGV nach 5'MR + 10'US: Menge [%] / d₅₀ [µm] des Feinanteils | 80 / 2,1 | 67 / 1,9 | 70 / 1,9 | 50 / 1,9 | 43 / 2,0 |
| TGV nach 5'MR + 10'US: d₅₀ [µm] des Grobanteils | 15 | 17 | 13 | 21 | 21 |

**Tabelle 7d: geglüht bei 800°C:**

| | | | | | |
|---|---|---|---|---|---|
| Mol-% Al, Rest Ti | 40 | 25 | 15 | 7 | 3 |
| Gewichtsverlust [%] | 23,8 | 16,7 | 15,9 | 19,7 | 19,7 |
| BET (davon in Mikroporen) [m²/g] | 76 (5) | 49 (6) | 35 | 33 | 23 |
| Porenvolumen [cm³/g] | 0,33 | 0,36 | | | |
| gefundene kristalline Verbindungen | Anatas | Anatas | Anatas | Anatas | Anatas, Rutil |
| Anataskristallit größe [nm] | 17 | 18 | 24 | 25 | |
| TGV nach 5'MR: Menge [%] / d₅₀ [µm] des Feinanteils | 57 / 1,9 | | | | |
| TGV nach 5'MR: d₅₀ [µm] des Grobanteils | 26 | | | | |
| TGV nach 5'MR + 10'US: Menge [%] / d₅₀ [µm] des Feinanteils | 66 / 2,0 | | | | |
| TGV nach 5'MR + 10'US: d₅₀ [µm] des Grobanteils | 16 | | | | |

## Patentansprüche

1. Oxidmischung enthaltend mindestens eine feste Lösung von Al₂O₃ und TiO₂ ineinander, wobei die Oxidmischung 0,5 bis 45 Mol-%, bevorzugt 1 bis 40 Mol-%, besonders bevorzugt 2 bis 40 Mol-% Al und Poren mit einem Porendurchmesser d₅₀ nach BJH zwischen 2 und 50 nm, bevorzugt zwischen 2 und 40 nm, besonders bevorzugt zwischen 2 und 20 nm besitzt, wobei die spezifische Oberfläche der Oxidmischung nach BET zwischen 5 und 800 m²/g, bevorzugt zwischen 30 und 600 m²/g, besonders bevorzugt zwischen 50 und 450 m²/g beträgt, **dadurch gekennzeichnet, dass** die logarithmische Durchmesserverteilung der Poren eine Breite σ von höchstens 0,40, besonders bevorzugt zwischen 0,05 und 0,40 hat und die Teilchengröße d₅₀ der festen Lösung bei von 0,5 bis 10 µm liegt.

2. Oxidmischung nach Anspruch 1, **dadurch gekennzeichnet, dass** das Porenvolumen der Oxidmischung nach BJH zwischen 0,02 und 2 cm³/g, bevorzugt 0,05 bis 1 cm³/g, besonders bevorzugt 0,05 bis 0,7 cm³/g beträgt.

3. Oxidmischung nach Anspruch 1 oder 2, **dadurch gekennzeichnet, dass** das Porenvolumen der Oxidmischung zu 30 % bis 99 %, bevorzugt zu 50 % bis 99 %, besonders bevorzugt zu 70 bis 99 % durch Mesoporen gebildet wird.

4. Oxidmischung nach einem oder mehreren der Ansprüche 1 bis 3, **dadurch gekennzeichnet, dass** das Porenvolumen der Oxidmischung zu 100 % durch Mesoporen gebildet wird.

5. Oxidmischung nach einem oder mehreren der Ansprüche 1 bis 3, **dadurch gekennzeichnet dass** sie zusätzlich Mikroporen mit einem Porendurchmesser d₅₀ zwischen 1 und 2 nm besitzt.

6. Oxidmischung nach einem oder mehreren Ansprüchen 1 bis 5, **dadurch gekennzeichnet, dass** die Teilchengröße d₅₀ der festen Lösung bei von 1 bis 5, bevorzugt von 1,2 bis 3,5 und besonders bevorzugt bei 1,5 bis 2,5 µm liegt.

7. Verfahren zur Herstellung einer Oxidmischung nach einem oder mehreren der Ansprüche 1 bis 6, **dadurch gekennzeichnet, dass** hydratisierten Vorformen von TiO₂ und Al₂O₃ aus wässrigen Ti- und Al-haltigen Lösungen ohne Verwendung von organischen oder metallorganischen Verbindungen gefällt werden, wobei eine alkalische AI-Lösung so langsam zur Ti-Lösung gegeben wird und anschließend der pH-Wert durch Zugabe von Basen, bevorzugt von basischen wässrigen Lösungen, besonders bevorzugt von wässrigen Lösungen von LiOH, NaOH, KOH oder NH₃, so langsam auf 4 bis 8, bevorzugt auf 6 bis 7 angehoben wird, dass die Fällgeschwindigkeit zwischen 30 und 1 g, bevorzugt zwischen 30 und 5 g, besonders bevorzugt zwischen 28 und 5 g Produkt (gerechnet als TiO₂ + Al₂O₃ pro L Ansatzvolumen und Stunde Fälldauer beträgt, und die Oxidmischung als Fällungsprodukt abgetrennt, vorzugsweise durch Filtration, ggf. gewaschen, vorzugsweise mit wässriger (NH₄)₂CO₃-Lösung, und ggf. getrocknet wird.

8. Verfahren zur Herstellung nach Anspruch 7, **dadurch gekennzeichnet, dass** es sich bei der wässrigen Ti-Lösung um eine wässrige Titanylchlorid-, -nitrat- oder - sulfatlösung handelt, die zwischen 50 und 400 g/L, bevorzugt zwischen 60 und 300 g/L, besonders bevorzugt zwischen 60 und 250 g/L Titan enthält.

9. Verfahren zur Herstellung nach Anspruch 7 oder 8, **dadurch gekennzeichnet, dass** es sich bei der wässrigen AI-Lösung um eine wässrige Alkalialuminatlösung handelt, die zwischen 50 und 350 g/L, bevorzugt zwischen 60 und 300 g/L, besonders bevorzugt zwischen 70 und 250 g/L Aluminium enthält.

10. Verfahren zur Herstellung nach einem der Ansprüche 7 bis 9, **dadurch gekennzeichnet, dass** die gereinigte und getrocknete Oxidmischung bei Temperaturen zwischen 350 und 900°C, bevorzugt zwischen 400 und 850 °C über einen Zeitraum zwischen 1 und 20 Stunden, bevorzugt zwischen 2 und 10 Stunden, besonders bevorzugt zwischen 2 und 6 Stunden geglüht wird.

11. Verfahren zur Herstellung nach einem der Ansprüche 7 bis 9, **dadurch gekennzeichnet, dass** die Oxidmischung bei Temperaturen von 100 bis 250 °C über einen Zeitraum zwischen 1 und 20 Stunden, bevorzugt zwischen 2 und 16 Stunden, besonders bevorzugt zwischen 2 und 6 Stunden hydrothermal- behandelt wird.

12. Verwendung einer Oxidmischung nach einem der Ansprüche 1 bis 6 als Katalysator und/oder Katalysatorträger, bevorzugt in chemischen Katalyseverfahren, in der petrochemischen Industrie und/oder in der organischen Grundstoffsynthese, besonders bevorzugt beim (Hydro-)Cracken und/oder Entschwefeln von Naphtha und Schweröl, ganz besonders bevorzugt im fluid-catalytic-cracking- (FCC) und deep-catalytic- (DCC) - Verfahren für hochschwefelhaltige Rohstoffe sowie im HDS-(hydrodesuphurization) - Verfahren und beim Hydrieren aromatischer Bestandteile, beim Isomerisieren und/oder Dehydrieren von leicht siedenden Kohlenwasserstoffen, ganz besonders bevorzugt in der Erdölaufbereitung zur Erhöhung der Olefinausbeute sowie in der Butan- und Butenisomerisierung, in der Fischer-Tropsch-Synthese, ganz besonders bevorzugt zur Kohleverflüssigung, und/oder beim partiellen Oxidieren von gesättigten und ungesättigten Kohlenwasserstoffen, ganz besonders bevorzugt zu Essigsäure, Acrylsäure, Maleinsäure, Phthtal- und Terephthalsäure, in der Epoxidierung von langkettigen Olefinen, Terpenen und von Cyclohexan, sowie in der Hydroxylierung mehrkerniger Aromaten.

13. Verwendung einer Oxidmischung nach einem der Ansprüche 1 bis 6 in Systemen zur Stofftrennung, vorzugsweise als Packungsmaterial in Chromatographiesäulen.

14. Verwendung einer Oxidmischung nach einem der Ansprüche 1 bis 6 sowohl als Katalysator und/oder Katalysatorträger als auch als chomatographische feste Phase in ein und demselben Apparat bei einem technischen Produktionsverfahren.

## Claims

1. An oxide mixture containing at least one solid solution of Al₂O₃ and TiO₂ one in the other, wherein the oxide mixture has 0.5 mol % to 45 mol %, preferably 1 mol % to 40 mol %, particularly preferably 2 mol % to 40 mol % of Al and pores with a BJH pore diameter d₅₀ between 2 and 50 nm, preferably between 2 and 40 nm, particularly preferably between 2 and 20 nm, wherein the BET specific surface area of the oxide mixture is between 5 and 800 m²/g, preferably between 30 and 600 m²/g, particularly preferably between 50 and 450 m²/g, **characterized in that** the logarithmic distribution of the pore diameters has a width σ of at most 0.40, particularly preferably between 0.05 and 0.40 and the d₅₀ particle size of the solid solution is from 0.5 to 10 µm.

2. The oxide mixture as claimed in claim 1, **characterized in that** the BJH pore volume of the oxide mixture is between 0.02 and 2 cm³/g, preferably 0.05 to 1 cm³/g, particularly preferably 0.05 to 0.7 cm³/g.

3. The oxide mixture as claimed in claim 1 or claim 2, **characterized in that** 30% to 99%, preferably 50% to 99%, particularly preferably 70% to 99% of the pore volume of the oxide mixture is formed by mesopores.

4. The oxide mixture as claimed in one or more of claims 1 to 3, **characterized in that** up to 100% of the pore volume of the oxide mixture is formed by mesopores.

5. The oxide mixture as claimed in one or more of claims 1 to 3, **characterized in that** it additionally has micropores with a pore diameter d₅₀ of between 1 and 2 nm.

6. The oxide mixture as claimed in one or more of claims 1 to 5, **characterized in that** the particle size d₅₀ of the solid solution is from 1 to 5, preferably from 1.2 to 3.5 and particularly preferably 1.5 to 2.5 µm.

7. A method for the manufacture of an oxide mixture as claimed in one or more of claims 1 to 6, **characterized in that** hydrated preforms of TiO₂ and Al₂O₃ are precipitated from aqueous solutions containing Ti and Al without the use of organic or organometallic compounds, wherein an alkaline Al solution is slowly added to the Ti solution and subsequently, the pH is slowly raised from 4 to 8, preferably to 6 to 7 by adding bases, preferably basic aqueous solutions, particularly preferably aqueous solutions of LiOH, NaOH, KOH or NH₃ in a manner such that the precipitation rate is between 30 and 1 g, preferably between 30 and 5 g, particularly preferably between 28 and 5 g of product (calculated as SiO₂ + Al₂O₃) per L of batch volume and per hour of precipitation period, and the oxide mixture is separated out as the precipitation product, preferably by filtration or washed if appropriate, preferably with aqueous (NH₄)₂CO₃ solution, and dried if appropriate.

8. The manufacturing method as claimed in claim 7, **characterized in that** the aqueous Ti solution is an aqueous titanyl chloride, nitrate or sulphate solution which contains between 50 and 400 g/L, preferably between 60 and 300 g/L, particularly preferably between 60 and 250 g/L of titanium.

9. The manufacturing method as claimed in claim 7 or claim 8, **characterized in that** the aqueous Al solution is an aqueous alkali aluminate solution which contains between 50 and 350 g/L, preferably between 60 and 300 g/L, particularly preferably between 70 and 250 g/L of aluminium.

10. The manufacturing method as claimed in one of claims 7 to 9, **characterized in that** the purified and dried oxide mixture is calcined at temperatures between 350°C and 900°C, preferably between 400°C and 850°C for a period between 1 and 20 hours, preferably between 2 and 10 hours, particularly preferably between 2 and 6 hours.

11. The manufacturing method as claimed in one of claims 7 to 9, **characterized in that** the oxide mixture is hydrothermally treated at temperatures of 100°C to 250°C over a period between 1 and 20 hours, preferably between 2 and 16 hours, particularly preferably between 2 and 6 hours.

12. Use of an oxide mixture as claimed in one of claims 1 to 6, as a catalyst and/or catalyst support, preferably in chemical catalytic processes in the petrochemicals industry and/or in basic organic chemical synthesis, particular preferably for (hydro)cracking and/or desulphurization of naphtha and heavy oil, more particularly preferably in the fluid catalytic cracking process (FCC) and deep catalytic process (DCC) for high-sulphur raw materials, as well as in the HDS (hydrodesulphurization) process and in the hydrogenation of aromatic components, in the isomerization and/or dehydrogenation of low-boiling hydrocarbons, more particularly preferably in petroleum processing to increase the olefin yield, as well as in butane and butene isomerisation, in Fischer-Tropsch synthesis, more particularly preferably for coal liquefaction and/or for the partial oxidation of saturated and unsaturated hydrocarbons, more particularly preferably for the formation of acetic acid, acrylic acid, maleic acid, phthalic acid and terephthalic acid, for the epoxidation of long-chain olefins, terpenes and of cyclohexane, as well as for the hydroxylation of polynuclear aromatics.

13. Use of an oxide mixture as claimed in one of claims 1 to 6 in systems for separating materials, preferably as a packing material in chromatographic columns.

14. Use of an oxide mixture as claimed in one of claims 1 to 6, both as a catalyst and/or catalyst support and as a chromatographic solid phase in one and the same apparatus in a technical production process.

## Revendications

1. Mélange d'oxydes contenant au moins une solution solide d'Al₂O₃ et de TiO₂, l'un dans l'autre, le mélange d'oxydes comprenant de 0,5 à 45 % en moles, de préférence de 1 à 40 % en moles, de manière particulièrement préférée de 2 à 40 % en moles d'Al et des pores d'un diamètre poreux d₅₀ selon BJH compris entre 2 et 50 nm, de préférence compris entre 2 et 40 nm, de manière particulièrement préférée compris entre 2 et 20 nm, la surface spécifique du mélange d'oxydes selon BET étant comprise entre 5 et 800 m²/g, de préférence comprise entre 30 et 600 m²/g, de manière particulièrement préférée, comprise entre 50 et 450m²/g, **caractérisé en ce que** la distribution logarithmique du diamètre poreux ayant une largeur σ d'un maximum de 0,40, de manière particulièrement préférée comprise entre 0,05 et 0,40 et la taille des particules d₅₀ de la solution solide se situant à environ 0,5 à 10 µm.

2. Mélange d'oxydes selon la revendication 1, **caractérisé en ce que** le volume poreux du mélange d'oxydes selon BJH est compris entre 0,02 et 2 cm³/g, de préférence entre 0,05 à 1 cm³/g, de manière particulièrement préférée, entre 0,05 à 0,7 cm³/g.

3. Mélange d'oxydes selon la revendication 1 ou 2, **caractérisé en ce que** le volume poreux du mélange d'oxydes est formé à de 30 % à 99 %, de préférence à de 50 % à 99 %, de manière particulièrement préférée à de 70 à 99 % par des mésopores.

4. Mélange d'oxydes selon l'une quelconque ou plusieurs des revendications 1 à 3, **caractérisé en ce que** le volume poreux du mélange d'oxydes est formé à 100 % par des mésopores.

5. Mélange d'oxydes selon l'une quelconque ou plusieurs des revendications 1 à 3, **caractérisé en ce qu'**il comprend en supplément des micropores d'un diamètre poreux d₅₀ compris entre 1 et 2 nm.

6. Mélange d'oxydes selon l'une quelconque ou plusieurs des revendications 1 à 5, **caractérisé en ce que** la taille des particules d₅₀ de la solution solide se situe à de 1 à 5, de préférence à de 1,2 à 3,5 et de manière particulièrement préférée à de 1,5 à 2,5 µm.

7. Procédé destiné à la préparation d'un mélange d'oxydes selon l'une quelconque ou plusieurs des revendications 1 à 6, **caractérisé en ce qu'**on fait précipiter des formes préliminaires hydratées de TiO₂ et d'Al₂O₃ à partir de solutions aqueuses contenant du Ti et de l'Al, sans utiliser des composés organiques ou métallo-organiques, sachant qu'on ajoute si lentement une solution alcaline d'Al à la solution de Ti et qu'ensuite on relève la valeur pH par rajout de bases, de préférence de solutions aqueuses basiques, de manière particulièrement préférée de solutions aqueuses de LiOH, de NaOH, de KOH ou de NH₃ si lentement que la vitesse de précipitation se situe entre 30 et 1 g, de préférence entre 30 et 5 g, de manière particulièrement préférée, entre 28 et 5 g (calculée en tant que TiO₂ + Al₂O₃) par litre de volume de dépôt et par heure de durée de précipitation et qu'on sépare le mélange d'oxydes en tant que produit de précipitation, de préférence par filtrage, qu'on le lave le cas échéant, de préférence avec une solution aqueuse de (NH₄)₂CO₃ et qu'on le fait sécher le cas échéant.

8. Procédé destiné à la préparation selon la revendication 7, **caractérisé en ce que** la solution aqueuse de Ti est une solution aqueuse de chlorure de titanyle, de nitrure de titanyle ou de sulfate de titanyle qui contient entre 50 et 400 g/l, de préférence entre 60 et 300 g/l, de manière particulièrement préférée, entre 60 et 250 g/l de titane.

9. Procédé destiné à la préparation selon la revendication 7 ou 8, **caractérisé en ce que** la solution aqueuse d'Al est une solution aqueuse d'un aluminate alcalin qui contient entre 50 et 350 g/l, de préférence entre 60 et 300 g/l, de manière particulièrement préférée, entre 70 et 250 g/l d'aluminium.

10. Procédé destiné à la préparation selon la revendication 7 à 9, **caractérisé en ce qu'**on fait calciner le mélange d'oxydes purifié et séché à des températures comprises entre 350 et 900 °C, de préférence entre 400 et 850 °C sur une période comprise entre 1 et 20 heures, de préférence entre 2 et 10 heures, de manière particulièrement préférée, entre 2 et 6 heures.

11. Procédé destiné à la préparation selon la revendication 7 ou 9, **caractérisé en ce qu'**on soumet le mélange d'oxydes à un traitement hydrothermique à des températures de 100 et 250 °C sur une période comprise entre 1 et 20 heures, de préférence entre 2 et 16 heures, de manière particulièrement préférée, entre 2 et 6 heures.

12. Utilisation d'un mélange d'oxydes selon l'une quelconque des revendications 1 à 6 en tant que catalyseur et/ou en tant que support de catalyseur, dans des procédés chimiques de catalyse dans l'industrie pétrochimique et/ou dans la synthèse de produits organiques de base, de manière particulièrement préférée pour le (l'hydro) craquage et/ou la désulfuration de naphta et d'huile lourde, de manière tout particulièrement préférée pour le procédé de craquage catalytique fluide (FCC) et de craquage catalytique profond (DCC) pour des matières premières hautement sulfureuses, ainsi que pour le procédé HDS (hydrodésulfuration) et pour l'hydratation de composants aromatiques, pour l'isomérisation et/ou la déshydratation d'hydrocarbures à bas point d'ébullition, de manière tout particulièrement préférée pour le traitement de pétrole destiné à augmenter le rendement oléfinique, ainsi que pour l'isomérisation de butane et de butylène, dans la synthèse de Fischer-Tropsch, de manière tout particulièrement préférée pour la liquéfaction du charbon et/ou pour l'oxydation partielle d'hydrocarbures saturés et insaturés, de manière tout particulièrement préférée en acide acétique, en acide acrylique, en acide maléique, en acide phtalique et téréphtalique, pour l'époxydation d'oléfines, de terpènes et de cyclohexane à chaîne longue, ainsi que pour l'hydroxylation d'aromates polynucléaires.

13. Utilisation d'un mélange d'oxydes selon l'une quelconque des revendications 1 à 6 dans des systèmes de séparation des matières, de préférence en tant que matière de garnissage pour des colonnes chromatographiques.

14. Utilisation d'un mélange d'oxydes selon l'une quelconque des revendications 1 à 6, aussi bien en tant que catalyseur et/ou que support de catalyseur, qu'également en tant que phase chromatographique solide dans un seul et même appareil lors d'un procédé de production technique.
